# EUROPEAN PATENT APPLICATION

(11) **EP 4 715 633 A1**
(43) Date of publication of application: **25.03.2026**
(21) Application number: 25203389.9
(22) Date of filing: 19.09.2025
(51) Int. Cl.: G06F 16/583, G06F 16/587, G06F 16/51, G06F 16/532, G06F 40/00

(54) **IMAGE RECOGNITION BASED ON SIGNATURE ANALYSIS**

(30) Priority: 22.09.2024 IN 202421071543
(71) Applicant: Tyco Fire & Security GmbH, 8212 Neuhausen am Rheinfall (CH)
(72) Inventor: Rozner, Amit, Yehud (IL); Falik, Yohai, Petah Tikva (IL); Manor, Tamir, Milwaukee, 53209 (US); Muppala, Venkata Pavan, 509216 Shadnagar (IN); Gottumukkal, Rajkiran Kumar, 560037 Bengaluru (IN)
(74) Representative: Meissner Bolte Nürnberg

(57) **Abstract**

A system can include one or more memory devices that can store instructions thereon. The instructions can, when executed by one or more processors, cause the one or more processors to receive image data, extract a plurality of image frames from the image data, generate a plurality of image signatures that describe features within the plurality of image frames, store the plurality of image signatures in a database, receive a natural language query, generate a textual signature that describes the natural language query, and perform a search of the database for one or more matches between the textual signature and the plurality of image signatures.

## Description

This application claims the benefit of and priority to Indian Provisional Patent Application No. 202421071543, filed September 22, 2024, the entirety of which is incorporated by reference herein.

The present invention relates generally to building systems for buildings. This application relates more particularly, according to some example embodiments, to systems and methods for building security that use generative artificial intelligence.

Embodiments according to the invention are in particular disclosed in the appended claims. At least one embodiment relates to a system. The system can include one or more memory devices. The one or more memory devices can store instructions. The instructions can, when executed by one or more processors, cause the one or more processors to receive, from one or more cameras of a building, image data. The instructions can cause the one or more processors to extract a plurality of image frames from the image data. The instructions can cause the one or more processors to generate, using a first machine learning model, a plurality of image signatures that describe features within the plurality of image frames. The instructions can cause the one or more processors to store, responsive to generation of the plurality of image signatures, the plurality of image signatures in a database. The instructions can cause the one or more processors to receive, from a user device, a natural language query. The instructions can cause the one or more processors to generate, using a second machine learning model, a textual signature that describes the natural language query. The instructions can cause the one or more processors to query, responsive to generation of the textual signature, the database to search for one or more matches between the textual signature and the plurality of image signatures.

At least one embodiment relates to a system. The system can include one or more memory devices. The one or more memory devices can store instructions thereon. The instructions can, when executed by one or more processors, cause the one or more processors to receive, from one or more cameras of a building, image data. The instructions can cause the one or more processors to extract a plurality of image frames from the image data. The instructions can cause the one or more processors to generate, using a first machine learning model, a plurality of image signatures that describe features within the plurality of image frames. The instructions can cause the one or more processors to store, responsive to generation of the plurality of image signatures, the plurality of image signatures in a database. The instructions can cause the one or more processors to receive, from a user device, a natural language query. The instructions can cause the one or more processors to generate, using a second machine learning model, a textual signature that describes the natural language query. The instructions can cause the one or more processors to perform, responsive to generation of the textual signature, a search of the database for one or more matches between the textual signature and the plurality of image signatures.

In some embodiments, the instructions can cause the one or more processors to detect the one or more matches between the textual signature and at least one image signature of the plurality of image signatures. The instructions can cause the one or more processors to identify at least one image frame of the plurality of image frames that is described by the at least one image signature. The instructions can cause the one or more processors to output, for display by a display device, the at least one image frame.

In some embodiments, the first machine learning model can include an image encoder. The second machine learning model can include a text encoder. The instructions can cause the one or more processors to train the image encoder and the text encoder by compiling one or more sets of training data that include (i) one or more textual inputs and (ii) one or more image inputs, wherein the one or more textual inputs and the one or more image inputs both describe one or more training image frames. The instructions can cause the one or more processors to train the image encoder and the text encoder by providing the one or more textual inputs to the text encoder to cause the text encoder to generate one or more textual signatures. The instructions can cause the one or more processors to train the image encoder and the text encoder by providing the one or more image inputs to the image encoder to cause the image encoder to generate one or more image signatures. The instructions can cause the one or more processors to train the image encoder and the text encoder by detecting, based on a comparison between the one or more textual signatures and the one or more image signatures, that an amount of variance between the image encoder and the text encoder adheres to one or more aspects of contrastive loss-based training. The instructions can cause the one or more processors to train the image encoder and the text encoder by deploying the first machine learning model and the second machine learning model.

In some embodiments, the instructions can cause the one or more processors to, while the first machine learning model is being trained, provide, to the second machine learning model, one or more textual inputs that provide a textual description of at least one image frame. The one or more textual inputs can cause the second machine learning model to output one or more textual signatures that describe the at least one image frame. The instructions can cause the one or more processors to, while the first machine learning model is being trained, provide, to the first machine learning model, the at least one image frame to cause the first machine learning model to output one or more image signatures that describe the at least one image frame. The instructions can cause the one or more processors to, while the first machine learning model is being trained, determine a performance of the first machine learning model based on a difference between the one or more textual signatures and the one or more image signatures.

In some embodiments, the instructions can cause the one or more processors to detect that the natural language query includes an indication of one or more points in time or a particular zone within the building. The instructions can cause the one or more processors to identify, based on the search of the database, the one or more matches. The one or more matches can be between the textual signature and one or more image frames of the plurality of image frames. The instructions can cause the one or more processors to select at least one image frame of the one or more image frames based on metadata that corresponds to the at least one image frame.

In some embodiments, the metadata that corresponds to the at least one image frame can indicate at least one of a timestamp associated with the one or more points of time, or that the at least one image frame was captured from the particular zone within the building.

In some embodiments, generation of the plurality of image signatures can include the instructions causing the one or more processors to implement, prior to storage of the plurality of image signatures in the database, a data cache to store image signatures as they are output by the first machine learning model. Generation of the plurality of image signatures can include the instructions causing the one or more processors to, as the image signatures are stored in the data cache, compare one or more first image signatures of the image signatures with one or more second image signatures of the image signatures. The one or more first image signatures correspond to one or more first image frames which precede one or more second image frames for which the one or more second image signatures correspond to. Generation of the plurality of image signatures can include the instructions causing the one or more processors to, as the image signatures are stored in the data cache, select, based at least on the one or more first image signatures or the one or more second image signatures describing the one or more first image frames and the one or more second image frames, at least one image signature from the one or more first image signatures or the one or more second image signatures to represent both the one or more first image signatures and the one or more second image signatures within the database.

In some embodiments, comparison of the one or more first image signatures with the one or more second image signatures can include the instructions causing the one or more processors to determine that a vector difference between the one or more first image signatures and the one or more second image signatures is less than a threshold. Comparison of the one or more first image signatures with the one or more second image signatures can include the instructions causing the one or more processors to detect, based on the vector difference being less than the threshold, that the at least one image signature describes both the one or more first image signatures and the one or more second image signatures.

In some embodiments, comparison of the one or more first image signatures with the one or more second image signatures can include the instructions causing the one or more processors to determine that an amount of time elapsed between the one or more first image frames and the one or more second image frames is less than a predetermined threshold. Comparison of the one or more first image signatures with the one or more second image signatures can include the instructions causing the one or more processors to determine, based on the amount of time being less than the predetermined threshold, whether the at least one image signature describes both the one or more first image frames and the one or more second image frames.

In some embodiments, the first machine learning model can include an image encoder configured to generate one or more first vector embeddings. The second machine learning model can include a text encoder configured to generate one or more second vector embeddings. Performance of the search can include the instructions causing the one or more processors to perform a comparison between the one or more first vector embeddings and the one or more second vector embeddings.

In some embodiments, the comparison between the one or more first vector embeddings and the one or more second vector embeddings can include the one or more processors to determine a cosine similarity between the one or more first vector embeddings and the one or more second vector embeddings.

At least one embodiment relates to a method. The method can include receiving, by one or more processing circuits, from one or more cameras of a building, image data. The method can include extracting, by the one or more processing circuits, a plurality of image frames from the image data. The method can include generating, by the one or more processing circuits, using a first machine learning model, a plurality of image signatures that describe features within the plurality of image frames. The method can include storing, by the one or more processing circuits, responsive to generating the plurality of image signatures, the plurality of image signatures in a database. The method can include receiving, by the one or more processing circuits, from a user device, a natural language query. The method can include generating, by the one or more processing circuits, using a second machine learning model, a textual signature that describes the natural language query. The method can include performing, by the one or more processing circuits, responsive to generating the textual signature, a search of the database for one or more matches between the textual signature and the plurality of image signatures.

In some embodiments, the method can include detecting, by the one or more processing circuits, the one or more matches between the textual signature and at least one image signature of the plurality of image signatures. The method can include identifying, by the one or more processing circuits, at least one image frame of the plurality of image frames that is described by the at least one image signature. The method can include outputting, by the one or more processing circuits, for display by a display device, the at least one image frame.

In some embodiments, the first machine learning model can include an image encoder. The second machine learning model can include a text encoder. The method can include training, by the one or more processing circuits, the image encoder and the text encoder. Training the image encoder and the text encoder can include compiling, by the one or more processing circuits, one or more sets of training data that include (i) one or more textual inputs and (ii) one or more image inputs. The one or more textual inputs and the one or more image inputs both describe one or more training image frames. Training the image encoder and the text encoder can include providing, by the one or more processing circuits, the one or more textual inputs to the text encoder to cause the text encoder to generate one or more textual signatures. Training the image encoder and the text encoder can include providing, by the one or more processing circuits, the one or more image inputs to the image encoder to cause the image encoder to generate one or more image signatures. Training the image encoder and the text encoder can include detecting, by the one or more processing circuits, based on a comparison between the one or more textual signatures and the one or more image signatures, that an amount of variance between the image encoder and the text encoder adheres to one or more aspects of contrastive loss-based training. Training the image encoder and the text encoder can include deploying, by the one or more processing circuits, the first machine learning model and the second machine learning model.

In some embodiments, the method can include, while the first machine learning model is being trained, providing, by the one or more processing circuits, to the second machine learning model, one or more textual inputs that provide a textual description of at least one image frame. The one or more textual inputs cause the second machine learning model to output one or more textual signatures that describe the at least one image frame. The method can include, while the first machine learning model is being trained, providing, by the one or more processing circuits, to the first machine learning model, the at least one image frame to cause the first machine learning model to output one or more image signatures that describe the at least one image frame. The method can include, while the first machine learning model is being trained, determining, by the one or more processing circuits, a performance of the first machine learning model based on a difference between the one or more textual signatures and the one or more image signatures.

At least one embodiment relates to one or more non-transitory storage media. The one or more non-transitory storage media can store instructions thereon. The instructions can, when executed by one or more processors, cause the one or more processors to perform operations. The operations can include receiving, from one or more cameras of a building, image data. The operations can include extracting a plurality of image frames from the image data. The operations can include generating, using a first machine learning model, a plurality of image signatures that describe features within the plurality of image frames. The operations can include storing, responsive to generating the plurality of image signatures, the plurality of image signatures in a database. The operations can include receiving, from a user device, a natural language query. The operations can include generating, using a second machine learning model, a textual signature that describes the natural language query. The operations can include performing, responsive to generating the textual signature, a search of the database for one or more matches between the textual signature and the plurality of image signatures.

In some embodiments, the operations can include detecting the one or more matches between the textual signature and at least one image signature of the plurality of image signatures. The operations can include identifying at least one image frame of the plurality of image frames that is described by the at least one image signature. The operations can include outputting, for display by a display device, the at least one image frame.

In some embodiments, the first machine learning model can include an image encoder. The second machine learning model can include a text encoder. The operations can include training the image encoder and the text encoder. Training the image encoder and the text encoder can include compiling one or more sets of training data that include (i) one or more textual inputs and (ii) one or more image inputs. The one or more textual inputs and the one or more image inputs both describe one or more training image frames. Training the image encoder and the text encoder can include providing the one or more textual inputs to the text encoder to cause the text encoder to generate one or more textual signatures. Training the image encoder and the text encoder can include providing the one or more image inputs to the image encoder to cause the image encoder to generate one or more image signatures. Training the image encoder and the text encoder can include detecting, based on a comparison between the one or more textual signatures and the one or more image signatures, that an amount of variance between the image encoder and the text encoder adheres to one or more aspects of contrastive loss-based training. Training the image encoder and the text encoder can include deploying the first machine learning model and the second machine learning model.

In some embodiments, the operations can include, while the first machine learning model is being trained, providing, to the second machine learning model, one or more textual inputs that provide a textual description of at least one image frame. The one or more textual inputs cause the second machine learning model to output one or more textual signatures that describe the at least one image frame. the operations can include, while the first machine learning model is being trained, providing, to the first machine learning model, the at least one image frame to cause the first machine learning model to output one or more image signatures that describe the at least one image frame. the operations can include, while the first machine learning model is being trained, determining a performance of the first machine learning model based on a difference between the one or more textual signatures and the one or more image signatures.

In some embodiments, the operations can include detecting that the natural language query includes an indication of one or more points in time or a particular zone within the building. The operations can include identifying, based on the search of the database, the one or more matches. The one or more matches can be between the textual signature and one or more image frames of the plurality of image frames. The operations can include selecting at least one image frame of the one or more image frames based on metadata that corresponds to the at least one image frame.

### BRIEF DESCRIPTION OF THE DRAWINGS

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1 is a block diagram of an example of a machine learning model-based system to process collected information, according to some embodiments.
FIG. 2 is a block diagram of a system to generate vector embeddings, according to some embodiments.
FIG. 3 is a block diagram of a workflow to train a text encoder and an image encoder, according to some embodiments.
FIG. 4 is a flow diagram of a method to identify one or more image frames based on matches between text signatures and image signatures, according to some embodiments.

### DETAILED DESCRIPTION

Referring generally to the FIGURES, systems and methods in accordance with the present disclosure can implement various features to detect similarities and/or matches between image signatures and textual signatures. For example, various systems described herein may execute and/or implement machine learning models to generate vector embeddings that represent image data and textual data. As another example, one or more machine learning models may be executed to generate vector embeddings and/or signatures) for either image data (e.g., video recording, image frames, etc.) and/or textual data (e.g., natural language inputs, natural language queries, chatbot inputs, voice recordings, etc.). The various systems may store the vector embeddings in one or more databases and/or data structures for subsequent utilization and/or retrieval. For example, the vector embeddings may be stored in a database and the database may be subsequently queried to search for matches between image signatures and text signatures. The results of the queries (e.g., image data that corresponds to the image signatures matched to the text signatures) may be presented and/or otherwise displayed.

According to example embodiments, some systems and methods described herein may utilize machine learning, such as generative artificial intelligence (AI) and/or other types of AI models, in building management and/or monitoring. In some embodiments, the systems and methods utilize generative AI models and/or other types of machine learning models for analyzing and taking actions on image and/or video data, such as data captured from cameras within or near a building. Various example implementations are described below. In some implementations, the embodiments described herein and/or other types of embodiments could be implemented using systems and methods similar to those described in U.S. Provisional Patent Application No. 63/466,203, filed May 12, 2023, and/or Indian Patent Application No. 202321051518, filed August 1, 2023, both of which are incorporated herein by reference in their entireties.

AI and/or machine learning (ML) systems, including but not limited to LLMs or other generative AI models (e.g., generative transformer models, such as generative pretrained transformers, generative adversarial networks (GANs), etc.) and/or non-generative AI models (e.g., neural networks, such as deep neural networks), can be used to generate text data and data of other modalities in a responsive manner to real-time conditions, including generating strings of text data and/or other data that may not be provided in the same manner in existing documents, yet may still meet criteria for useful information, such as relevance, style, and coherence. For example, LLMs can predict text data based at least on inputted prompts and by being configured (e.g., trained, modified, updated, fine-tuned) according to training data representative of the text data to predict or otherwise generate.

In some embodiments, a user can interact with the system using a chat-based interaction. A search within the system can be initiated by voice prompt or talking with the system about what data a user is looking for. The output from the system can be voice based, which can prove useful in a mobile NVR system, robots, etc. By chatting with the system, a user can be more specific about the event they are interested in and the relevant data. For example, if a user searches for "person with red shirt," they can specify "man with red shirt" from the generated results. As another example, if a user searches for "person with backpack," they can specify "person with blue or dark backpack" from the generated results. A user can interact with VMS using chat and NLP. For example, the user can say "show me a view of all cameras covering our parking lot," and from there, the user can save a video from Camera No. 10 over the past hour to retrieve the footage relevant to the specific event they are interested in analyzing.

The system can enable a generative AI-based service wizard interface. For example, the interface can include user interface and/or user experience features configured to provide a question/answer-based input/output format, such as a conversational interface, that directs users through providing targeted information for accurately generating predictions and/or responses to the queries. In various implementations, the systems can include a plurality of machine learning models that may be configured using integrated or disparate data sources. This can facilitate more integrated user experiences or more specialized (and/or lower computational usage for) data processing and output generation. Outputs from one or more first systems, such as one or more first algorithms or machine learning models, can be provided at least as part of inputs to one or more second systems, such as one or more second algorithms or machine learning models. For example, a first language model can be configured to process unstructured inputs (e.g., text, speech, images, etc.) into a structure output format compatible for use by a second system, such as a root cause prediction algorithm or security configuration model.

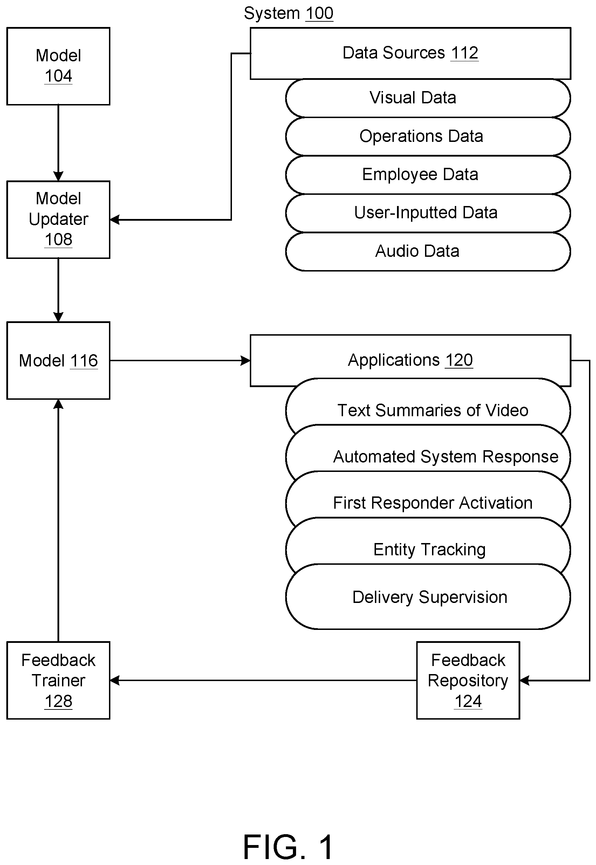

FIG. 1 depicts an example of a system 100. The system 100 can implement various operations for configuring (e.g., training, updating, modifying, transfer learning, fine-tuning, etc.) and/or operating various AI and/or ML systems, such as neural networks of LLMs or other generative AI systems. The system 100 can be used to implement various generative AI-based building security operations.

For example, the system 100 can be implemented for operations associated with video footage from facility cameras. The system 100 can translate video footage to text and create a library of text covering given periods of time, for example, a day. With the library of day-of texts, the system can perform text-to-text comparisons day over day (or between any specified periods) for the purpose of anomaly detection. A foundation model can be generated based on the data, and a large language model (LLM) can be generated to describe the pattern. In some embodiments, the systems and methods of the present disclosure can utilize models, including but not limited to the anomaly detection model, that can be or include a multi-modal model that is trained on, takes as input, and/or outputs data based on two or more different modalities of data (e.g., both image/video data and text data). For example, in some embodiments, the model may be, include, or be similar to a CLIP (Contrastive Language-Image Pretraining) model, such as a CLIP4Clip model that extracts features and/or textual/description content from image and/or video input, such as video footage from cameras of a building. CLIP4clip models can analyze video footage and summarize it using text and/or feature extraction. In order to train the anomaly detection model to generate a sufficient description of the video, the foundation model can be used to describe texture on the video and to create features of an embedding. The foundation model can then be used to create (e.g., train) another model using the output of the foundation model. According to some implementations, the present disclosure combines the foundation model with anomaly detection so that improved video descriptions using the foundation model can simplify training the anomaly detector and/or other types of models described herein.

In some embodiments, the system 100 can implement or utilize a multi-modal model that ingests video and outputs audio and/or ingests audio and outputs other modalities such as video or text, such as a CLIP to audio framework. In such a model, a neural network can include audio, video, and natural language processing (NLP) captions. This network will enable the model to understand audio events as well, whereas the original CLIP model only combines text and images. This model is useful in using unique sounds, such as the sound of a gunshot or aggressive behavior, to detect anomalies, for example. The concept can also be implemented in reverse using live annunciations. That is, a scene may be described to a user based on what is occurring (serving a similar purpose to subtitles on a video) rather than by typing the question into the system. In some implementations, alerts can be generated based on what a user's preidentified "watch items" may be. Example use cases of such implementations include a visually impaired user and/or process environment/control rooms.

Various components of the system 100 or portions thereof can be implemented by one or more processors coupled with or more memory devices (memory). The processors can be a general purpose or specific purpose processors, an application specific integrated circuit (ASIC), one or more field programmable gate arrays (FPGAs), a group of processing components, or other suitable processing components. The processors may be configured to execute computer code and/or instructions stored in the memories or received from other computer readable media (e.g., CDROM, network storage, a remote server, etc.). The processors can be configured in various computer architectures, such as graphics processing units (GPUs), distributed computing architectures, cloud server architectures, client-server architectures, or various combinations thereof. One or more first processors can be implemented by a first device, such as an edge device, and one or more second processors can be implemented by a second device, such as a server or other device that is communicatively coupled with the first device and may have greater processor and/or memory resources.

The memories can include one or more devices (e.g., memory units, memory devices, storage devices, etc.) for storing data and/or computer code for completing and/or facilitating the various processes described in the present disclosure. The memories can include random access memory (RAM), read-only memory (ROM), hard drive storage, temporary storage, non-volatile memory, flash memory, optical memory, or any other suitable memory for storing software objects and/or computer instructions. The memories can include database components, object code components, script components, or any other type of information structure for supporting the various activities and information structures described in the present disclosure. The memories can be communicably connected to the processors and can include computer code for executing (e.g., by the processors) one or more processes described herein. The memories can include non-transitory storage media.

### Machine Learning Models

The system 100 can include or be coupled with one or more first models 104. The first model 104 can include one or more neural networks, including neural networks configured as generative models. For example, the first model 104 can predict or generate new data (e.g., artificial data; synthetic data; data not explicitly represented in data used for configuring the first model 104). The first model 104 can generate any of a variety of modalities of data, such as text, speech, audio, images, and/or video data. The neural network can include a plurality of nodes, which may be arranged in layers for providing outputs of one or more nodes of one layer as inputs to one or more nodes of another layer. The neural network can include one or more input layers, one or more hidden layers, and one or more output layers. Each node can include or be associated with parameters such as weights, biases, and/or thresholds, representing how the node can perform computations to process inputs to generate outputs. The parameters of the nodes can be configured by various learning or training operations, such as unsupervised learning, weakly supervised learning, semi-supervised learning, or supervised learning.

The first model 104 can include, for example and without limitation, one or more language models, LLMs, attention-based neural networks, transformer-based neural networks, generative pretrained transformer (GPT) models, bidirectional encoder representations from transformers (BERT) models, encoder/decoder models, sequence to sequence models, autoencoder models, generative adversarial networks (GANs), convolutional neural networks (CNNs), recurrent neural networks (RNNs), diffusion models (e.g., denoising diffusion probabilistic models (DDPMs)), or various combinations thereof.

For example, the first model 104 can include at least one GPT model. The GPT model can receive an input sequence, and can parse the input sequence to determine a sequence of tokens (e.g., words or other semantic units of the input sequence, such as by using Byte Pair Encoding tokenization). The GPT model can include or be coupled with a vocabulary of tokens, which can be represented as a one-hot encoding vector, where each token of the vocabulary has a corresponding index in the encoding vector; as such, the GPT model can convert the input sequence into a modified input sequence, such as by applying an embedding matrix to the tokens of the input sequence (e.g., using a neural network embedding function), and/or applying positional encoding (e.g., sin-cosine positional encoding) to the tokens of the input sequence. The GPT model can process the modified input sequence to determine a next token in the sequence (e.g., to append to the end of the sequence), such as by determining probability scores indicating the likelihood of one or more candidate tokens being the next token, and selecting the next token according to the probability scores (e.g., selecting the candidate token having the highest probability scores as the next token). For example, the GPT model can apply various attention and/or transformer based operations or networks to the modified input sequence to identify relationships between tokens for detecting the next token to form the output sequence.

The first model 104 can include at least one diffusion model, which can be used to generate image and/or video data. For example, the diffusional model can include a denoising neural network and/or a denoising diffusion probabilistic model neural network. The denoising neural network can be configured by applying noise to one or more training data elements (e.g., images, video frames) to generate noised data, providing the noised data as input to a candidate denoising neural network, causing the candidate denoising neural network to modify the noised data according to a denoising schedule, evaluating a convergence condition based on comparing the modified noised data with the training data instances, and modifying the candidate denoising neural network according to the convergence condition (e.g., modifying weights and/or biases of one or more layers of the neural network). In some implementations, the first model 104 includes a plurality of generative models, such as GPT and diffusion models, that can be trained separately or jointly to facilitate generating multi-modal outputs, such as documents (e.g., security guides) that include both text and image/video information.

In some implementations, the first model 104 can include a multi-modal model configured to ingest data in one or more first modalities and output data in one or more second modalities. For example, in some implementations, the first model 104 can be or include a multi-modal model configured to ingest video and/or image data and output text of the video (e.g., text describing what appears in the video, textual context describing the video, etc.) and/or features of the video (feature embeddings, such as image feature extractions). In some implementations, the first model 104 may be trained using pairs of images and textual descriptions. In some implementations, the first model 104 may receive as input an image or video and may output a predicted textual description or feature extraction the first model 104 predicts to most closely correspond to the input data. In some implementations, the first model 104 may receive as input a textual description and output an image, set of images, video, etc. the first model 104 predicts to most closely correspond to the textual description. In some implementations, the first model 104 may be or include a CLIP or CLIP4Clip model. In some implementations, the first model 104 may additionally or alternatively be trained on, receive as input, and/or generate as output audio information, directly and/or by ingesting and/or generating textual data that is converted to audio or vice versa.

In some implementations, the first model 104 can be configured using various unsupervised and/or supervised training operations. The first model 104 can be configured using training data from various domain-agnostic and/or domain-specific data sources, including but not limited to various forms of text, speech, audio, image, and/or video data, or various combinations thereof. The training data can include a plurality of training data elements (e.g., training data instances). Each training data element can be arranged in structured or unstructured formats; for example, the training data element can include an example output mapped to an example input, such as a query representing a security operation or one or more portions of a security operation, and a response representing data provided responsive to the query. The training data can include data that is not separated into input and output subsets (e.g., for configuring the first model 104 to perform clustering, classification, or other unsupervised ML operations). The training data can include human-labeled information, including but not limited to feedback regarding outputs of the models 104, 116. This can allow the system 100 to generate more human-like outputs.

In some implementations, the training data includes data relating to building security systems. For example, the training data can include video footage or images from facility cameras, operations data, employee-related data, user-inputted data, and audio data. In some implementations, the video footage and/or images may be paired with corresponding textual descriptions of the images/videos, such that the training data includes image/text pairs. In some implementations, the training data used to configure the first model 104 includes at least some publicly accessible data, such as data retrievable via the Internet.

Referring further to FIG. 1, the system 100 can configure the first model 104 to determine one or more second models 116. For example, the system 100 can include a model updater 108 that configures (e.g., trains, updates, modifies, fine-tunes, etc.) the first model 104 to determine the one or more second models 116. In some implementations, the second model 116 can be used to provide application-specific outputs, such as outputs having greater precision, accuracy, or other metrics, relative to the first model, for targeted applications.

The second model 116 can be similar to the first model 104. For example, the second model 116 can have a similar or identical backbone or neural network architecture as the first model 104. In some implementations, the first model 104 and the second model 116 each include generative AI machine learning models, such as LLMs (e.g., GPT-based LLMs) diffusion models, and/or multi-modal models such as image-text models (e.g., models described above, such as CLIP and CLIP4Clip). The second model 116 can be configured using processes analogous to those described for configuring the first model 104.

In some implementations, the model updater 108 can perform operations on at least one of the first model 104 or the second model 116 via one or more interfaces, such as application programming interfaces (APIs). For example, the models 104, 116 can be operated and maintained by one or more systems separate from the system 100. The model updater 108 can provide training data to the first model 104, via the API, to determine the second model 116 based on the first model 104 and the training data. The model updater 108 can control various training parameters or hyperparameters (e.g., learning rates, etc.) by providing instructions via the API to manage configuring the second model 116 using the first model 104.

### Data Sources

The model updater 108 can determine the second model 116 using data from one or more data sources 112. For example, the system 100 can determine the second model 116 by modifying the first model 104 using data from the one or more data sources 112. The data sources 112 can include or be coupled with any of a variety of integrated or disparate databases, data warehouses, digital twin data structures (e.g., digital twins of assets or building management systems or portions thereof), data lakes, data repositories, documentation records, or various combinations thereof. In some implementations, the data sources 112 include security camera data in any of text, speech, audio, image, or video data, or various combinations thereof, such as data associated with detected anomalies including but not limited to crowd gatherings, crowd dispersion, unknown employees, misplaced assets, and/or threatening behavior. Various data described below with reference to data sources 112 may be provided in the same or different data elements, and may be updated at various points. The data sources 112 can include or be coupled with security operations (e.g., where the security operations output data for the data sources 112, such as sensor data, etc.). The data sources 112 can include various online and/or social media sources, such as blog posts or data submitted to applications maintained by entities that manage the buildings. The system 100 can determine relations between data from different sources, such as by using timeseries information and identifiers of the sites or buildings at which security operations are engaged to detect relationships between various different data relating to the security operation (e.g., to train the models 104, 116 using both timeseries data (e.g., sensor data; outputs of algorithms or models, etc.) regarding a given security operation and freeform natural language reports regarding the given security operation).

The data sources 112 can include an audio data source 112. For example, an audio data source 112 can include a live audio stream (e.g., to a phone or a radio) that can allow building security to monitor a site more effectively when minimal security staff is present (e.g., overnight). The live audio stream can describe any activity (e.g., identifying a delivery lorry at the building gate or an individual recognized in a secure area). The description can flag an event that should disturb the security. The security radio can be interrupted automatically to alert security of the scene and summarize the events seen by the cameras. This live audio description offers a more consistent security system, especially when the security operations center (SOC) may be left empty and can reduce the amount of security staff required on site.

The data sources 112 can include unstructured data or structured data (e.g., data that is labeled with or assigned to one or more predetermined fields or identifiers, or is in a predetermined format, such as a database or tabular format). The unstructured data can include one or more data elements that are not in a predetermined format (e.g., are not assigned to fields, or labeled with or assigned with identifiers, that are indicative of a characteristic of the one or more data elements). The data sources 112 can include semi-structured data, such as data assigned to one or more fields that may not specify at least some characteristics of the data, such as data represented in a report having one or more fields to which freeform data is assigned (e.g., a report having a field labeled "describe the security operation" in which text or user input describing the security operation is provided).

For example, using the first model 104 and/or second model 116 to process the data can allow the system 100 to extract useful information from data in a variety of formats, including unstructured/freeform formats, which can allow security personnel to input information in less burdensome formats. The data can be of any of a plurality of formats (e.g., text, speech, audio, image, video, etc.), including multi-modal formats. For example, the data may be received from security personnel in forms such as text (e.g., laptop/desktop or mobile application text entry), audio, and/or video (e.g., dictating findings while capturing video).

In some embodiments, a bank of prompt questions relevant to a particular location can be created to more effectively retrieve relevant images in the data sources 112. For example, bank prompt questions can vary from business building prompt questions, and so forth. CLIP can be used to create a daily transcript that is helped using proper prompt questions. For example, in a mall, a proper prompt question may be "Is there a boy alone by the escalator?" The prompt questions should be written with the objective of receiving the best response for retrieving relevant footage of the event.

The system 100 can include, with the data of the data sources 112, labels to facilitate cross-reference between items of data that may relate to common security operations, sites, security personnel, users, or various combinations thereof. For example, data from disparate sources may be labeled with time data, which can allow the system 100 (e.g., by configuring the models 104, 116) to increase a likelihood of associating information from the disparate sources due to the information being detected or recorded (e.g., as security reports) at the same time or near in time.

### Model Configuration

Referring further to FIG. 1, the model updater 108 can perform various machine learning model configuration/training operations to determine the second models 116 using the data from the data sources 112. For example, the model updater 108 can perform various updating, optimization, retraining, reconfiguration, fine-tuning, or transfer learning operations, or various combinations thereof, to determine the second models 116. The model updater 108 can configure the second models 116, using the data sources 112, to generate outputs (e.g., actions) in response to receiving inputs (e.g., prompts), where the inputs and outputs can be analogous to data of the data sources 112.

For example, the model updater 108 can identify one or more parameters (e.g., weights and/or biases) of one or more layers of the first model 104, and maintain (e.g., freeze, maintain as the identified values while updating) the values of the one or more parameters of the one or more layers. In some implementations, the model updater 108 can modify the one or more layers, such as to add, remove, or change an output layer of the one or more layers, or to not maintain the values of the one or more parameters. The model updater 108 can select at least a subset of the identified one or more parameters to maintain according to various criteria, such as user input or other instructions indicative of an extent to which the first model 104 is to be modified to determine the second model 116. In some implementations, the model updater 108 can modify the first model 104 so that an output layer of the first model 104 corresponds to output to be determined for applications 120.

Responsive to selecting the one or more parameters to maintain, the model updater 108 can apply, as input to the second model 116 (e.g., to a candidate second model 116, such as the modified first model 104, such as the first model 104 having the identified parameters maintained as the identified values), training data from the data sources 112. For example, the model updater 108 can apply the training data as input to the second model 116 to cause the second model 116 to generate one or more candidate outputs.

The model updater 108 can evaluate a convergence condition to modify the candidate second model 116 based at least on the one or more candidate outputs and the training data applied as input to the candidate second model 116. For example, the model updater 108 can evaluate an objective function of the convergence condition, such as a loss function (e.g., L1 loss, L2 loss, root mean square error, cross-entropy or log loss, etc.) based on the one or more candidate outputs and the training data; this evaluation can indicate how closely the candidate outputs generated by the candidate second model 116 correspond to the ground truth represented by the training data. The model updater 108 can use any of a variety of optimization algorithms (e.g., gradient descent, stochastic descent, Adam optimization, etc.) to modify one or more parameters (e.g., weights or biases of the layer(s) of the candidate second model 116 that are not frozen) of the candidate second model 116 according to the evaluation of the objective function. In some implementations, the model updater 108 can use various hyperparameters to evaluate the convergence condition and/or perform the configuration of the candidate second model 116 to determine the second model 116, including but not limited to hyperparameters such as learning rates, numbers of iterations or epochs of training, etc.

As described further herein with respect to applications 120, in some implementations, the model updater 108 can select the training data from the data of the data sources 112 to apply as the input based at least on a particular application of the plurality of applications 120 for which the second model 116 is to be used for. For example, the model updater 108 can select data from the visual data source 112 for the first responder activation application 120, or select various combinations of data from the data sources 112 (e.g., visual data, operations data, and audio data) for the first responder activation application 120. The model updater 108 can apply various combinations of data from various data sources 112 to facilitate configuring the second model 116 for one or more applications 120.

In some implementations, the system 100 can perform at least one of conditioning, classifier-based guidance, or classifier-free guidance to configure the second model 116 using the data from the data sources 112. For example, the system 100 can use classifiers associated with the data, such as identifiers of the detected anomaly, a duration of the detected anomaly, a risk assessment of the detected anomaly, a site at which the anomaly is detected, or a history of anomalies at the site, to condition the training of the second model 116. For example, the system 100 can combine (e.g., concatenate) various such classifiers with the data for inputting to the second model 116 during training, for at least a subset of the data used to configure the second model 116, which can enable the second model 116 to be responsive to analogous information for runtime/inference time operations.

### Applications

Referring further to FIG. 1, the system 100 can use outputs of the one or more second models 116 to implement one or more applications 120. For example, the second models 116, having been configured using data from the data sources 112, can be capable of precisely generating outputs that represent useful, timely, and/or real-time information for the applications 120. In some implementations, each application 120 is coupled with a corresponding second model 116 that is specifically configured to generate outputs for use by the application 120. Various applications 120 can be coupled with one another, such as to provide outputs from a first application 120 as inputs or portions of inputs to a second application 120.

The applications 120 can include user interfaces, dashboards, wizards, checklists, conversational interfaces, chatbots, configuration tools, or various combinations thereof. The applications 120 can receive an input, such as a prompt (e.g., from a user), provide the prompt to the second model 116 to cause the second model 116 to generate an output, such as a completion in response to the prompt, and present an indication of the output. The applications 120 can receive inputs and/or present outputs in any of a variety of presentation modalities, such as text, speech, audio, image, and/or video modalities. For example, the applications 120 can receive unstructured or freeform inputs from a user, such as a security officer, and generate reports in a standardized format, such as a user-specific format. This can allow, for example, security personnel to automatically, and flexibly, generate user-ready reports after security events without requiring strict input by the security officer or manually sitting down and writing reports; to receive inputs as dictations in order to generate reports; to receive inputs in any form or a variety of forms, and use the second model 116 (which can be trained to cross-reference metadata in different portions of inputs and relate together data elements) to generate output reports (e.g., the second model 116, having been configured with data that includes time information, can use timestamps of input from dictation and timestamps of when an image is taken, and place the image in the report in a target position or label based on time correlation).

In some implementations, the applications 120 include at least one text summary application configured to generate text summaries of video footage for users. In some such implementations, the text summary application may generate text summaries depending on one or more of a variety of different factors, such as a user/recipient's role, position, and/or responsibilities (e.g., Executive-, Director-, and Operator-level details). For example, the text summary application may generate, based on a particular video input or set of video inputs, a first summary for an executive-level user and a different second summary for an operator-level user. In various implementations, the summaries may differ based on the type of content, the amount of content, a timeframe to which the summary corresponds, a frequency of generating the summary (e.g., more frequent summaries for a lower-level role), etc.

While role is one example factor for determining the text summaries, the summaries could be generated based in part on a variety of other factors, including, but not limited to, location, individuals present at the location, events (e.g., events occurring at the location), and/or various other factors. In some embodiments, the text summary application may output a short summary of one or more input videos and/or images. In some embodiments, a foundation model or other type of model can be used to combine a plurality of summaries (e.g., many small summaries). In some embodiments, the video can be analyzed with object detection or motion detection to omit irrelevant or motionless video footage from being sent to the model (e.g., using a smart camera with an AI model to run the analysis).

In various embodiments, a variety of different factors and/or image processing techniques may be utilized to determine portions of input videos/images that are more or less relevant than other portions, and "relevance" may differ depending on the intended use case (e.g., movement may be most relevant for one use case but not for another use case). In some embodiments, the system can use a push model to send push notifications with the summaries through SMS, email, app notifications, and/or some other method. The summaries can also be sent at different frequencies depending on the user (e.g., user role, user preferences, etc.).

In some implementations, the text summary application can include any user-specified duration of video footage. When the user initiates a query to receive the summary, they may define a window of time for the summary to cover. An LLM or other type of machine learning or AI model can be used to combine text description outputs from multiple videos into a narrative summary. The LLM can create context that can be fed into a bank of queries from the users and/or into a CLIP query. Additionally, or alternatively, textual output from a multi-modal model such as CLIP can be fed into an LLM configured to generate a combined narrative summary from the output.

In various examples, the model may perform basic concatenation of the individual textual descriptions to form the full description or may perform more complex processing, such as generating a unique, new textual description of multiple video and/or image inputs. The results from the LLM can be grouped over a window of time, and the text descriptions from the group can be used to create the narrative summary received by the user. For example, if a user requests a day summary for a particular worker or other individual on the site, the narrative may include time and/or other circumstances of the worker's arrival to site, time spent on site, time seen actively working versus taking breaks, any unusual actions or activities outside the norm of what would be expected for the worker's role, time of departure from site, etc. According to some embodiments, the present disclosure creates unique use cases of the summaries of videos by weaving them together into a more useful deliverable to the user.

The text summary application can be used in summary-to-summary comparisons, such as to generate risk scores, in some example implementations. Interaction between the user and the system, such as receiving user feedback, can collect the user's evaluation of the level of risk for certain activities. A risk notification can be sent to a user based on the video to text analysis. Context from the video (for example, was an employee in the building alone, was there detection of a fire, was there an indoor air quality alert, etc.) can be provided in order to identify one or more users to receive the notification; for example, one context may cause the system to generate an alert for a single user designated to address a particular issue associated with the context, and another context may cause the system to send alerts to multiple users, such as a security officer and a facility manager and/or a person to whom there may be a risk in view of the context, either as simultaneous alerts, cascading alerts (e.g., such that an alert is sent to a second recipient if a first recipient does not acknowledge an alert or take action in a particular timeframe), or in some other manner. An alert can activate another specific model, such as wide area tracking or re-identification. For example, if the video analysis detects a child alone in the building, the associated alert can activate a wide area tracking model to know where to send security. This risk scoring process can automatically assess the risk level from the text description of the videos and determine whether immediate action is required based on that assessment. In some implementations, the models may generate actual scores evaluating a severity and/or location impact of the risk event, such as a numerical score or other relative risk score.

In some embodiments, the text summary application can be used to automatically create an incident storyboard by combining the text summary with significant images (e.g., persons of interest, damages, etc.). A security team can create an incident report including still image capture, original video clips, and textual summaries describing what happened, but an automatically created incident storyboard may be more efficient when responding to an anomaly (e.g., by automatically generating relevant context as opposed to leaving it to the security team to glean the context from the raw data). In some example implementations, this storyboard can be automatically sent to users who may have additional information to fill in (for example, identifying names).

In some implementations, the applications 120 can include at least one automated system response application (e.g., calling the police and/or fire services dispatch or turning on a fire alarm and/or security alert system). Receiving a textual summary of the event or an alarm can trigger an automated system response application 120 based on what is identified in the text. The response can vary automatically based on different contexts, in some implementations. The system may be used to trigger a sequence of operations (e.g., a life safety process, propping and/or unlocking doors, etc.) and can depend on whether an individual identified in the video is a known individual/employee or an unknown individual. The automation path that is triggered may differ depending on the results of the video analysis. For example, the automation may differ based on a type of event revealed by the video (e.g., fire, intruder, fight or other security event, active shooter, unauthorized entry, etc.). In some examples, the automation may differ based on a context of the video; for example, if the context indicates a user is attempting to escape an active shooter, the automation may unlock or automatically open a door to allow the user to escape, where if the context indicates the individual is the active shooter, the automation may shut and/or lock doors to trap the shooter in a confined space. The action to be taken can be automated based on the natural language processing (NLP) summary of the video.

For example, one automated action may include announcing a fire in the building using a public service announcement (PSA) throughout the building. In order to implement the automation component in a building, processes similar to those used in a supervisory control and data acquisition (SCADA) architecture can be used to respond to live events happening across a facility. For example, system outputs such as light levels or process flow can be altered and signage can be controlled to assist with directing the response to an emergency. Integration into facility systems such as elevators, building controllers, signage, lighting, water controls, power usage, network management (to enable or disable Ethernet ports), etc., can be used to trigger the automated system response application after detecting an anomaly and assessing the risk.

In some implementations, the applications 120 can include at least one first responder activation application, for example, based on situational awareness. Live or non-live notifications associated with anomalous scenes can be provided for first responder support based on situational awareness. For example, paramedic support may be provided in response to a crowd gathering around an injured individual, police or tactical support may be provided in response to a sudden crowd dispersion due to an individual revealing a weapon, firefighters may be deployed in response to crowd dispersion due to an accident involving a fire, etc.

In some cases, first responder support may be provided for general flow management as a preventative action when large crowds suddenly gather in areas due to events such as school outings or road closures, for example. When live statistics of approximate people counts in key areas indicate an abnormal event, integration of an autonomous response system into textual and/or audio systems for public annunciations, signage, lighting, and barrier control may be provided. This integration layer can link together automation, video, access control, building management, and fire assessment systems, for example, such as to provided support when a staged evacuation is triggered. The autonomous live monitoring can show changes in statistics of people and vehicle (live and historic) flow with sub-system displays. The foundation model can review scenes to deliver a higher-level command and control solution (end-to-end). In some cases, outside companies may generate reports from social media to a facility's security center that can also be used in risk evaluation and response automation. In an area with large crowds, when a normal situation becomes an anomaly, the system may serve to narrow down the most important aspects of the situation and identify where the security staff should focus their response.

In some implementations, the applications 120 can include at least one entity tracking application. An anomaly detection can be instantiated by a digital twin entity of an event or of a set of assets, in some implementations. Data contained in the digital twin can be matched with characteristics from video footage spanning multiple cameras to detect anomalies. A narrative story of that digital twin can be created. Compliance and current state data that is stored in the digital twin can be used to identify changes that should not have taken place. These changes can be flagged as an anomaly. For example, when camera footage reveals hospital equipment that is not in its correct position as indicated by the digital twin entity, this may be flagged as an anomaly. While a digital twin is specifically discussed here, it should be understood that the video data and/or text summaries and/or feature extractions of the video data can additionally or alternatively be compared to data from any other type of data source, and is not limited to digital twins.

The entity tracking application can also be used to produce reports detailing the handling of stock. For example, when dealing with perishable stock, the time that it is not in its proper storage environment needs to be controlled/minimized. In order to do so, the perishable stock can be identified and monitored, raising alerts if the stock is not placed in its proper storage environment within an appropriate time. The entity tracking application 120 can also generate handling reports for deliveries related to perishable stock. An AI model can also be trained to identify a range of stock mishandling events (e.g. if the stock is dropped, knocked/rammed, maliciously damaged, or if new stock is placed in front of old). The entity tracking application 120 can then create review actions and reports.

In some implementations, the applications 120 can include a delivery supervision application 120. Deliveries can arrive at a facility any time of the day or night, so multiple AI/visual intelligence functions can be employed to monitor these around-the-clock deliveries. For example, license plate recognition (LPR) can initially recognize the delivery. Then, facial recognize can verify the driver. An interactive voice can direct the driver to the assigned loading bay. The system can open and close the gate and monitor for tailgaters. The truck can be monitored from the gate as it travels to its assigned loading bay, the system reporting any abnormalities to a remote SOC. The system can then open and light the assigned loading bay. The load can be monitored, noting the characteristics of the delivery (e.g., four pallets left), and any abnormalities or safety issues (e.g., the driver fell) can be reported. The truck's departure can be monitored from the assigned loading bay back to the gate. The gate can be opened and closed. The assigned loading bay can be closed upon the truck's departure. A delivery report is then generated and sent to the appropriate team. A similar series of functions can also be applied to collections, with the interactive voice assigning the stock for collection rather than the loading bay.

### Feedback Training

Referring further to FIG. 1, the system 100 can include at least one feedback trainer 128 coupled with at least one feedback repository 124. The system 100 can use the feedback trainer 128 to increase the precision and/or accuracy of the outputs generated by the second models 116 according to feedback provided by users of the system 100 and/or the applications 120.

The feedback repository 124 can include feedback received from users regarding output presented by the applications 120. For example, for at least a subset of outputs presented by the applications 120, the applications 120 can present one or more user input elements for receiving feedback regarding the outputs. The user input elements can include, for example, indications of binary feedback regarding the outputs (e.g., good/bad feedback; feedback indicating the outputs do or do not meet the user's criteria, such as criteria regarding technical accuracy or precision); indications of multiple levels of feedback (e.g., scoring the outputs on a predetermined scale, such as a 1-5 scale or 1-10 scale); freeform feedback (e.g., text or audio feedback); or various combinations thereof.

The system 100 can store and/or maintain feedback in the feedback repository 124. In some implementations, the system 100 stores the feedback with one or more data elements associated with the feedback, including but not limited to the outputs for which the feedback was received, the second model(s) 116 used to generate the outputs, and/or input information used by the second models 116 to generate the outputs.

The feedback trainer 128 can update the one or more second models 116 using the feedback. The feedback trainer 128 can be similar to the model updater 108. In some implementations, the feedback trainer 128 is implemented by the model updater 108; for example, the model updater 108 can include or be coupled with the feedback trainer 128. The feedback trainer 128 can perform various configuration operations (e.g., retraining, fine-tuning, transfer learning, etc.) on the second models 116 using the feedback from the feedback repository 124. In some implementations, the feedback trainer 128 identifies one or more first parameters of the second model 116 to maintain as having predetermined values (e.g., freeze the weights and/or biases of one or more first layers of the second model 116), and performs a training process, such as a fine tuning process, to configure parameters of one or more second parameters of the second model 116 using the feedback (e.g., one or more second layers of the second model 116, such as output layers or output heads of the second model 116).

In some implementations, the system 100 may not include and/or use the model updater 108 (or the feedback trainer 128) to determine the second models 116. For example, the system 100 can include or be coupled with an output processor that can evaluate and/or modify outputs from the first model 104 prior to operation of applications 120, including to perform any of various post-processing operations on the output from the first model 104. For example, the output processor can compare outputs of the first model 104 with data from data sources 112 to validate the outputs of the first model 104 and/or modify the outputs of the first model 104 (or output an error) responsive to the outputs not satisfying a validation condition.

### Connected Machine Learning Models

Referring further to FIG. 1, the second model 116 can be coupled with one or more third models, functions, or algorithms for training/configuration and/or runtime operations. The third models can include, for example and without limitation, any of various models relating to security operations, such as alarm usage models, entity tracking models, facility population models, or air quality models. For example, the second model 116 can be used to process unstructured information regarding security operations into predefined template formats compatible with various third models, such that outputs of the second model 116 can be provided as inputs to the third models; this can allow more accurate training of the third models, more training data to be generated for the third models, and/or more data available for use by the third models. The second model 116 can receive inputs from one or more third models, which can provide greater data to the second model 116 for processing.

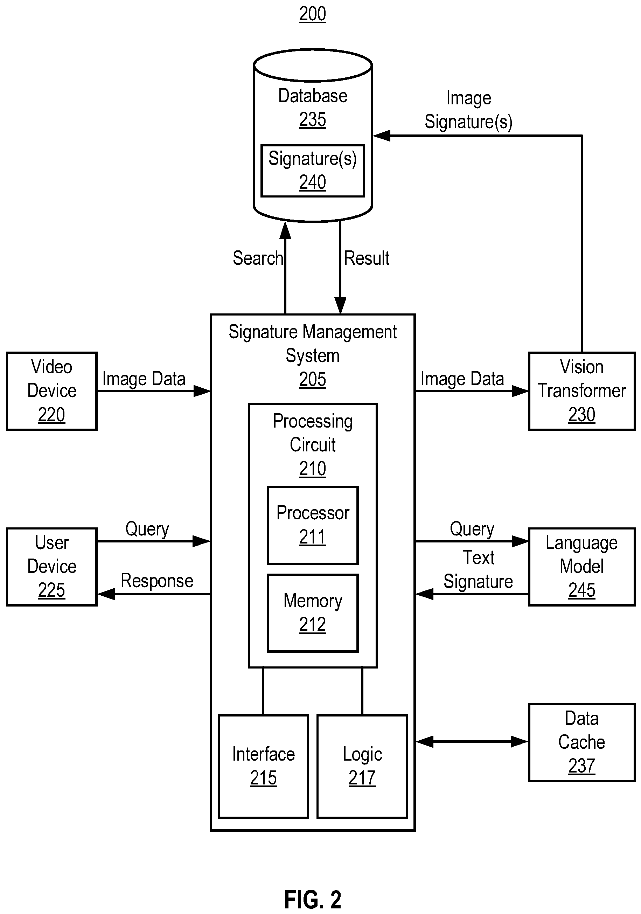

FIG. 2 depicts a block diagram of a system 200, according to some embodiments. The system 200 and/or one or more systems, components, and/or devices thereof may implement and/or include the various types of hardware and/or circuitry described herein. For example, the one or more devices of the system 200 may include processors to execute instructions stored in memory. In some embodiments, the system 200 and/or one or more portions thereof may include, implement, and/or utilize the various types of machine learning models and/or artificial intelligence models described herein. The system 200 may be implemented as a distributed system such that systems, devices, and/or components of the system 200 are separate and/or remote to one another. In some embodiments, the system 200 may be modified and/or adjusted such that one or more systems, devices, and/or components thereof may be separated, combined, removed, added, replaced, supplemented, and/or otherwise changed. For example, a first component and a second component of the system 200 may be combined into a single component.

In some embodiments, the system 200 may include at least one signature management system 205, at least one video device 220, at least one user device 225, at least one vision transformer 230, at least one database 235, at least one data cache 237, and at least one language model 245. The components of the system 200 may be communicably coupled with one another via one or more interfaces (e.g., network interface, cellular connections, wired connections, etc.) such that information may be exchanged between the components of the system 200. For example, the components of the system 200 may be communicably coupled with one another via one or more network devices connected over a wide area network (WAN).

In some embodiments, the vision transformer 230 may refer to and/or include at least one of a vision language model, a multi-modal model, a vision model, and/or other possible machine learning and/or artificial intelligence models that can detect and/or extract information from image data. For example, the vision transformer 230 may include models trained to perform facial recognition, objection detection, image segmentation, and/or other possible image processing. The vision transformer 230 may be trained using tagged datasets that include image data that is labeled with the contents (e.g., what is shown in and/or included in the image data).

In some embodiments, the language model 245 may refer to and/or include at least one of a natural language processing model, a text summarization model, a sentiment analysis model, and/or other possible machine learning and/or artificial intelligence models that can detect and/or extract information from text data.

As shown in FIG. 2, the signature management system 205 includes a processing circuit 210, an interface 215, and logic 217. In some embodiments, the processing circuit 210 may include one or more processors (shown as processor 211 in FIG. 2) that execute instructions, stored in memory (shown as memory 212 in FIG. 2) of the processing circuit 210, to cause the processors 211 to perform one or more of the various operations and/or actions described herein. For example, the processing circuit 210 may execute instructions to cause the processing circuit 210 to perform the functionality of the signature management system 205. In some embodiments, the interface 215 may communicably couple the processing circuit 210 with one or more components of the system 200. For example, the interface 215 may include a network interface card to communicably couple the processing circuit 210 with the user device 225.

In some embodiments, the logic 217 may refer to or include one or more rules based or logic based programs or routines for which the processing circuit 210 and/or the processor 211 may implement to perform deduplication analysis or temporal proximity analysis. For example, the processor 211 may implement logic 217 to identify at least one first image signature which accurately describes or represents one or more second image signatures. By identify the at least one first image signature (via implementation of the logic 217) the processor 211 can prevent duplication of storage as the at least one image signature accurately describes the one or more second image signatures as well.

In some embodiments, the video device 220 may include at least one of cameras, audio devices, image recording devices, and/or other possible devices that can capture and/or record images and/or video. For example, the video device 220 may include a camara that can record video. In some embodiments, the user device 225 may include at least one of a mobile phone, a smart phone, a tablet, a laptop, a computing device, a computer, a monitor, a display device, and/or other possible electrical device that can execute one or more processes.

In some embodiments, the video devices 220 may be located, disposed, and/or otherwise positioned at one or more locations. For example, the video devices 220 may be positioned at one or more points of a building (e.g., floors, rooms, zones, etc.). As another example, the video devices 220 may be positioned at one or more entrances or entry points of a building. In some embodiments, the video devices 220 may be located in and/or proximate to at least one of a school building, a commercial building, a mall, a server room, a hospital building, a mixed use building, a residential building, a grocery store, a service center, and/or other possible type of building.

As shown in FIG. 2, the video devices 220 may provide information and/or data (shown as Image Data in FIG. 2) to the signature management system 205. For example, the video devices 220 may forward or otherwise provide video feeds and/or video data captured by the video devices 220. As another example, the video devices 220 may provide video recordings or other possible video files to the processing circuit 210. In some embodiments, the image data may include raw and/or unfiltered images and/or videos captured by the video devices 220. For example, the image data may include video recordings captures by the video devices 220 at one or more time increments. As another example, the video devices 220 may simply forward the image data in a continuous stream as the video devices 220 capture the image data. In some embodiments, the image data may include and/or capture one or more objects. For example, the image data may capture people and/or individuals walking past the video devices 220. As another example, the video device 220 may be positioned near an elevator and the video device 220 may record and/or capture images of people as they pass or navigate near the elevator.

In some embodiments, the processing circuit 210 may forward and/or otherwise provide the image data, collected by the video device 220, to one or more machine learning models for processing. For example, as shown in FIG. 2, the processing circuit 210 provides the image data to the vision transformer 230. In some embodiments, the vision transformer 230 may include one or more models trained to generate vectors, vector embeddings, and/or signatures that represent and/or describe image data. For example, the vision transformer 230 may be trained to generate vector embeddings based on one or more image frames. In some embodiments, the vision transformer 230 may be trained using at least one of the various techniques described herein. For example, the vision transformer 230 may be trained using supervised learning.

In some embodiments, the vision transformer 230 may receive the raw image data (e.g., the data provided and/or collected by the video devices 220). For example, the processing circuit 210 may forward and/or pass the image data to the vision transformer 230 responsive to collection of the image data by the video devices 220. In some embodiments, the processing circuit 210 may pre-process and/or otherwise filter the image data. For example, if the image data is a 1 minute recording, the processing circuit 210 may pre-process the recording into 60 image frames (e.g., 1 image frame for each second of the recording). In some embodiments, the processing circuit 210 may implement and/or execute one or more object detection and/or tracker functions to identify objects within the image data. For example, the processing circuit 210 may detect and/or obtain object tracks. In some embodiments, the processing circuit 210 may apply a sampler to each object track to sample one or more crops. The processing circuit 210 may forward and/or otherwise provide the crops to the vision transformer 230. In some embodiments, the crops may be represented by and/or included in one or more image frames.

In some embodiments, the processing circuit 210 may provide and/or transmit metadata and/or other contextual data to the vision transformer. For example, the processing circuit 210 may assign a frame ID (e.g., an identifier) for each image frame. As another example, the processing circuit 210 may indicate a time stamp for the image data and/or corresponding image frame (e.g., when the data was captured, when the data was recorded, etc.). As another example, the processing circuit 210 may provide information that indicates a given location of the video device 220 (e.g., where the video device 220 is located in a building), a given location within a building (e.g., this image data was captured in a server room that is located on floor 2 of a building, this image data was captured at the elevator bank located in zone 5 on the southeast corner of floor 5, etc.).

In some embodiments, the vision transformer 230 may generate and/or output one or more vectors. For example, the vision transformer 230 may generate vector embeddings that represent and/or otherwise describe the image data. In some embodiments, the vision transformer 230 may generate image signatures (e.g., vector embeddings, vectors, digital values, etc.) for one or more image frames (e.g., the image data). For example, the vision transformer 230 may generate a first image signature for a first image frame. As another example, the vision transformer 230 may generate a second image signature for a second image frame.

In some embodiments, the processing circuit 210 may store and/or cause the storage of the image signatures generated by the vision transformer 230. For example, as shown in FIG. 2, the vision transformer 230 provides the image signatures to the database 235. In some embodiments, the database 235 may store and/or otherwise maintain the image signatures, generated by the vision transformer 230, as signatures 240. For example, the database 235 may include one or more dynamic random-access memory (DRAM) banks that can store the signatures 240. As another example, the database 235 may include one or more server racks and/or other possible remote storage that can maintain the signatures 240.

In some embodiments, the data cache 237 may refer to or include short term or temporary memory in which image signatures (as they are generated by the vision transformer 230) may be stored otherwise located for subsequent analysis or pre-processing. For example, the data cache 237 may refer to queue or temporary storage for which signatures are located prior to a deduplication analysis or pre-processing routine by the processing circuit 210.

In some embodiments, the image signatures (e.g., the signatures 240) may be pre-processed and/or otherwise analyzed, prior to storage by the database 235. For example, the vision transformer 230 may include and/or otherwise maintain one or more short term memory caches (e.g., the data cache 237) that can store a given number of image signatures. To continue this example, the vision transformer 230 may compare and/or otherwise evaluate one or more image signatures to determine whether the image signatures describe one or more distinct pieces of information. Stated otherwise, the vision transformer 230 may evaluate image signatures to determine whether multiple image signatures provide similar and/or duplicative information. The vision transformer 230 may evaluate image signatures as there are received and/or generated. For example, the vision transformer 230 may evaluate one or more first image signatures with one or more second image signatures that precede or follow the first image signatures. Stated otherwise, the vision transformer 230 may evaluate one or more sets of image signatures that correspond to image frames that occurred prior to or after additional image frames.

In some embodiments, the vision transformer 230 may combine and/or otherwise average multiple image signatures such that a single image signature describes multiple image frames. Stated otherwise, the vision transformer 230 may reduce and/or restrict the number of signatures provided to the database 235 by grouping and/or combining similar image frames into a single image signature. For example, the vision transformer 230 may compare vector embeddings that correspond to a particular track and/or collection of tracks. In some embodiments, the vision transformer 230 may generate a mean vector embedding that represents each track. The vision transformer 230 may forward and/or provide the mean vector embedding to the database 235.

In some embodiments, the processing circuit 210 may receive one or more queries from the user device 225. For example, the processing circuit 210 may receive one or more messages and/or inputs, via a chatbot application running on the user device 225. As another example, the processing circuit 210 may receive one or more natural language queries. In some embodiments, the natural language queries may include input text, textual strings, and/or other possible character strings provided by the user device 225. For example, the natural language queries may include a message provided to and/or entered into an input window. As another example, the natural language queries may include a string provided by the user device 225.

In some embodiments, the queries (e.g., natural language queries, input text, input messages, etc.) may represent and/or include one or questions and/or requests provided by the user device 225. For example, a first query may be associated with a request for a first set of information. As another example, a second query may be associated with a query regarding information stored in the database 235. In some embodiments, the queries may be textual inputs (e.g., written, transcribed, entered, etc.) and/or audible inputs (e.g., spoken, recited, etc.). For example, a first query may include an audio recording captured by the user device 225.

In some embodiments, the queries may include one or more requests for data captured by the video devices 220 (e.g., the image data). For example, a first query may include a message "please provide video feeds of people wearing a red shirt." As another example, a second query may include a message "please provide video feeds of people wearing backpacks." In some embodiments, the processing circuit 210 may provide and/or otherwise forward the natural language queries to the language model 245. For example, the processing circuit 210 may provide the natural language queries as one or more application programming interface (API) calls to the language model 245.

In some embodiments, the processing circuit 210 may filter and/or otherwise pre-process the natural language queries (e.g., text inputs, text strings, etc.). For example, the processing circuit 210 may execute and/or implement one or more functions to convert the text inputs and/or one or more portions thereof in tokens. As another example, the processing circuit 210 may feed and/or provide, to the language model 245, the input text as one or more characters extracted from the input text.

In some embodiments, the language model 245 may be trained to implement and/or execute one or more natural language processing techniques to process and/or otherwise evaluate the natural language queries. For example, the language model 245 may be trained to detect context and/or sentiment associated with the natural language queries. In some embodiments, the language model 245 may generate and/or otherwise output one or more vectors. For example, the language model 245 may generate vector embeddings that describe and/or otherwise represent the natural language queries. In some embodiments, the language model 245 may output the vector embeddings as one or more text signatures. The language model 245 may provide and/or otherwise forward the text signatures to the processing circuit 210. For example, the processing circuit 210 may provide a first natural language query as a request to the language model 245. The language model 245 may return and/or otherwise output a text signature that describes the first natural language query. In some embodiments, the language model 245 may generate one or more vector embeddings based on and/or using the tokens provided by the processing circuit 210.

In some embodiments, the processing circuit 210 may query and/or otherwise search the database 235 for one or more matches and/or similarities between the text signatures and the signatures 240. Stated otherwise, the processing circuit 210 may query the database 235 to detect one or more signatures 240 that represent image data that corresponds to the text signature. In some embodiments, the processing circuit 210 may implement one or more techniques and/or calculations to detect similarities between the text signatures and the signatures 240. For example, the processing circuit 210 may determine one or Euclidean distances between the text signatures and the signatures 240. As another example, the processing circuit 210 may generate and/or determine one or more similarity metrics (e.g., cosine similarity, vector similarity, data similarity, etc.).

In some embodiments, the processing circuit 210 may detect one or more matches and/or similarities based on the distances between the signatures. For example, the processing circuit 210 may select a given signature 240 based on the distance between the given signature 240 and the text signature being closest to zero. In some embodiments, the processing circuit 210 may detect matches by comparing individual data (e.g., numbers, digits, etc.) between the signatures. The processing circuit 210 may detect and/or determine similarities based on one or more returned values from the database 235. For example, the processing circuit 210 may provide, to the database 235, a given text signature. The database 235 may query or search the signatures 240 for matches. In some embodiments, the database 235 may return results (e.g., given signatures 240) that had the highest similarity score.

In some embodiments, the processing circuit 210 may filter and/or reduce the given number of signatures to query by using the metadata associated with the image data. For example, the natural language query may specify a given day and/or time frame for which to return image data. The processing circuit 210 may restrict and/or reduce the query of the database 235 to signatures 240 corresponding to image frames that were captured during the specified time frame based on metadata associated with the image frames. As another example, the natural language query may specify a given area of a building (e.g., a given room, a given floor, a given zone, etc.). The processing circuit 210 may restrict and/or reduce the query of the database 235 to signatures 240 corresponding to image frames that were captured by video devices 220 located in the specified area based on metadata that describes the video devices.

In some embodiments, the processing circuit 210 may provide one or more responses to the user device 225. For example, the processing circuit 210 may retrieve and/or access image frames associated with the signatures 240 that correspond to the natural language queries (e.g., matches). As another example, the processing circuit 210 may cause the user device 225 to display a user interface that presents and/or otherwise provides the image frames. In some embodiments, the processing circuit 210 may forward and/or provide the raw image data to the user device 225.

While the vision transformer 230 and the language model 245 are illustrated, in FIG. 2, as separate and/or discrete components, this is for illustrative purposes only and is in no way limiting. For example, the vision transformer 230 and the language model 245 may be implemented and/or otherwise combined as a multi-modal model trained to perform the functionality of the vision transformer 230 and the language model 245. As another example, the vision transformer 230 and the language model 245 may be implemented as a vison language model.

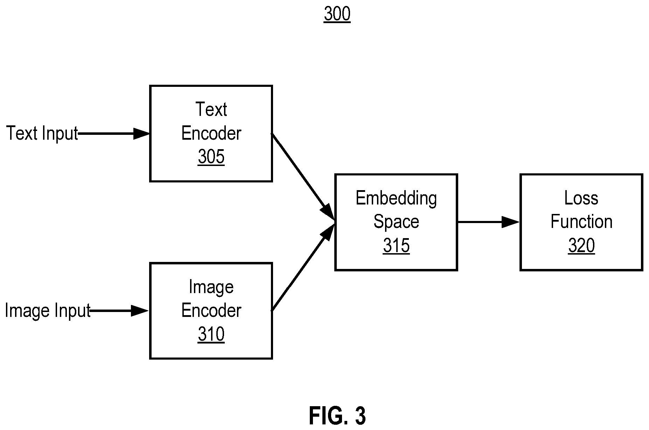

FIG. 3 depicts a block diagram of a workflow 300, according to some embodiments. In some embodiments, the workflow 300 or one or more elements thereof can refer to or represent one or more processes or functions implemented the signature management system 205 or the processing circuit 210. For example, the processing circuit 210 may implement or otherwise execute one or more elements of the workflow 300. In some embodiments, the workflow 300 may refer to or include one or more processes or steps to train, retrain, and/or reinforce one or more models described herein. For example, the vision transformer 230 and/or language model 245 may be trained in accordance with the workflow 300. While the illustration of the workflow 300 (with respect to FIG. 3) may indicate or suggestion a flow or directionality, this is for illustrative purposes only and is in no way limiting.

As shown in FIG. 3, the workflow 300 includes a text encoder 305, an image encoder 310, an embedding space 315, and a loss function 320. In some embodiments, the text encoder 305 and the image encoder 310 may represent separate encoders or one or more encoders that are adjusted with prompts. For example, the language model 245 may implement or utilize the text encoder 305. As another example, the vision transformer 230 may implement or utilize the image encoder 310. In some embodiments, the text encoder 305 and the image encoder 310 may receive one or more respective inputs. For example, as shown in FIG. 3, the text encoder 305 receives one or more text inputs and the image encoder 310 receives one or more image inputs.

In some embodiments, the inputs provided to the text encoder 305 and/or the image encoder 310 may corresponds to similar image frames or video segments. For example, the text input (provided to text encoder 305) may include a string "person wearing a blue hat." To continue this example, the image input may include an image from a person that is wearing a blue hat. In this example, the inputs provided to the text encoder 305 and the image encoder 310 are similar in that they both pertain to a person in a blue hat.

In some embodiments, similar inputs may be provided to both the text encoder 305 and the image encoder 310 to train each encoder to generate or otherwise output similar signatures when provided similar inputs or prompts. For example, a text input (provided to the text encoder 305) may include textual context that is similar to or otherwise matches what is shown in an image frame that is provided to the image encoder 310. In some embodiments, as the text encoder 305 and the image encoder 310 generate outputs (e.g., signatures), the processing circuit 210 can store or compile the outputs in the embedding space 315 for subsequent evaluation or processing.

In some embodiments, training the text encoder 305 and the image encoder 310 with contextual similar inputs may refer to or include implementation of a unified optimization objective. The unified optimization objective can train the encoders (e.g., the text encoder 305, the image encoder 310, etc.) to accurately or consistently match textual descriptions (e.g., text inputs) with visual content (e.g., image frames). For example, implementation of the unified optimization objective can reward or reinforce the encoders to produce similar representations for matching textual descriptions and image frames. Additionally, or alternatively, implementation of the unified optimization objective can train the encoders to generate different signatures when presented with non-matching or dissimilar inputs. In some embodiments, the training of the text encoder 305 and the image encoder 310 can provide semantic consistency of outputs (e.g., signatures) across one or more modalities. Additionally, or alternatively, the training of the text encoder 305 and the image encoder 310 can result in outputs that identify meaningful relationships between textual or language descriptions and visual features (e.g., image frames) without the encoders having to rely on any single type of loss or metric.

In some embodiments, the loss function 320 can filter or otherwise isolate one or more outputs (of the text encoder 305 or the image encoder 310) that introduced discrepancies or variances between outputs. For example, the loss function 320 can identify one or more outputs (of the text encoder 305) that do not match one or more outputs of the image encoder 310, even though each of the text encoder 305 and the image encoder 310 were provided respective inputs that pertain to a similar image or image feature. The loss function 320 can reinforce or retrain the text encoder 305 and/or the image encoder 310 based on one or more results of the outputs in the embedding space 315.

In some embodiments, one or more outputs of the text encoder 305 and/or one or more outputs of the image encoder 310 may be used to train one or more encoders or models. For example, the outputs of the text encoder 305 may be used to train the image encoder 310. As another example, the outputs of the image encoder 310 may be used to train the text encoder 305. In some embodiments, the processing circuit 210 may provide textual inputs (to the text encoder 305 and/or the language model 245) that provide a textual description of one or more image frames. For example, if the image frame illustrates a person with yellow pants, the processing circuit 210 may provide a textual input that includes tokens to represent each of "person," "wearing,'' "yellow," and "pants." In some embodiments, the inputting of the textual inputs may cause the text encoder 305 and/or the language model 245 to generate one or more outputs (e.g., signatures).

In some embodiments, the outputs of the text encoder 305 and/or the language model 245 may be used to train the image encoder 310 and/or the vision transformer 230. For example, the underlying image frames (for which the textual inputs described) may be provided as inputs to the image encoder 310 and/or the vision transformer 230. Stated otherwise, the processing circuit 210 may provide one or more image frames (that were described by the textual inputs input into the text encoder 305) to the image encoder 310 and/or the vision transformer 230. In some embodiments, the image frames may cause the image encoder 310 and/or the vision transformer 230 to generate one or more outputs. For example, the image encoder 310 may generate one or more image signatures based on the image frames.

In some embodiments, the processing circuit 210 can determine a performance of the vision transformer 230 and/or the image encoder 310. For example, the processing circuit can compare one or more image signatures (generated by the vision transformer 230) with one or more text signatures generated by the language model 245. In this example, the text signatures may correspond to one or more textual inputs (provided to the language model 245) that describe one or more corresponding image frames provided to the vision transformer 230. In some embodiments, the processing circuit 210 may identify one or more differences or variances between the signatures generated by the vision transformer 230 and the signatures generated by the language model 245. In some embodiments, the processing circuit 210 can train, retrain, or reinforce the vision transformer and/or the image encoder 310 based on the differences or variances between the text signatures and the image signatures.

In some embodiments, the system 200 can include one or more memory devices. For example, the system 200 can include memory 212. The one or more memory devices can store instructions thereon. For example, the memory 212 can store instructions. The instructions can, when executed by one or more processors, cause the one or more processors to perform one or more actions or operations. For example, the instructions stored by the memory 212 can cause, when executed by the processor 211, the processor 211 to perform one or more operations.

In some embodiments, the instructions stored by the one or more memory devices can cause the one or more processors to receive, from one or more cameras of a building, image data. For example, the instructions stored by the memory 212 can cause the processor 211 to receive image data from the video device 220. In some embodiments, the image data can refer to or include one or more image frames or video segments collected by or otherwise obtained by the video device 220.

In some embodiments, the instructions stored by the one or more memory devices can cause the one or more processors to extract a plurality of image frames from the image data. For example, the instructions stored by the memory 212 can cause the processor 211 to extract a plurality of image frames from the image data received from the video device 220. In some embodiments, the processor 211 can extract the plurality of image frames by parsing, separating, or other segmenting the image data.

In some embodiments, the instructions stored by the one or more memory devices can cause the one or more processors to generate, using a first machine learning model, a plurality of image signatures that describe features within the plurality of image frames. For example, the instructions stored by the memory 212 can cause the processor 211 generate, using the vision transformer 230, a plurality of image signatures. In some embodiments, the processor 211 can generate image signatures that describe or otherwise correspond to the plurality of image frames extracted from the image data.

In some embodiments, the instructions stored by the one or more memory devices can cause the one or more processors to store, responsive to generation of the plurality of image signatures, the plurality of image signatures in a database. For example, the instructions stored by the memory 212 can cause the processor 211 to store, responsive to generation of the plurality of image signatures, the plurality of image signatures in the database 235. For example, the processor 211 can store the plurality of image signatures as the signatures 240. In some embodiments, the processor 211 can store the signatures 240 by transmitting or otherwise providing the signatures 240 to the database 235.

In some embodiments, the instructions stored by the one or more memory devices can cause the one or more processors to receive, from a user device, a natural language query. For example, the instructions stored by the memory 212 can cause the processor 211 to receive, from the user device 225, a natural language query. In some embodiments, the processor 211 may receive the natural language query during a chatbot session or communication session between the processor 211 and the user device 225.

In some embodiments, the instructions stored by the one or more memory devices can cause the one or more processors to generate, using a second machine learning model, a textual signature that describes the natural language query. For example, the instructions stored by the memory 212 can cause the processor 211 to generate, using the language model 245, a textual signature that describes the natural language query received from the user device 225. In some embodiments, the processor 211 can generate the textual signature by providing or otherwise inputting one or more prompts (to the language model 245) which cause the language model to output the textual signatures.

In some embodiments, the instructions stored by the one or more memory devices can cause the one or more processors to perform, responsive to generation of the textual signature, a search of the database for one or more matches between the textual signature and the plurality of image signatures. For example, the instructions stored by the memory 212 can cause the processor 211 to perform, responsive to generation of the textual signature, a search of the database 235 for one or more matches. In some embodiments, the processor 211 can perform the search of the database 235 for matches between the signatures 240 and the textual signatures.

In some embodiments, the instructions stored by the one or more memory devices can cause the one or more processors to detect the one or more matches between the textual signature and at least one image signature of the plurality of image signatures. For example, the instructions stored by the memory 212 can cause the processor 211 to detect matches between the textual signature and one or more signatures stored in the database 235. As another example, the processor 211 can utilize cosine similarity to detect matches or similarities between the image signatures and the textual signature.

In some embodiments, the instructions stored by the one or more memory devices can cause the one or more processors to identify at least one image frame of the plurality of image frames that is described by the at least one image signature. For example, the instructions stored by the memory 212 can cause the processor 211 to identify at least one image frame extracted from the image data that is described by the at least one image signature. Stated otherwise, the processor 211 can identify an image frame that is described by the image signature that matched to the textual signature.

In some embodiments, the instructions stored by the one or more memory devices can cause the one or more processors to output, for display by a display device, the at least one image frame. For example, the instructions stored by the memory 212 can cause the processor 211 to output, for display by the user device, the at least one image frame. In some embodiments, the processor 211 can output the at least one image frame as a response to the natural language query. For example, the at least one image frame can include the object for which the natural language query mentioned.

In some embodiments, the first machine learning model includes an image encoder. For example, the vision transformer 230 can include the image encoder 310. In some embodiments, the second machine learning model includes a text encoder. For example, the language model 245 can include the text encoder 305.

In some embodiments, the instructions stored by the one or more memory devices can cause the one or more processors to train the image encoder and the text encoder by compiling one or more sets of training data that include (i) one or more textual inputs and (ii) one or more image inputs. The one or more textual inputs and the one or more image inputs can both describe one or more training image frames. For example, the instructions stored by the memory 212 can cause the processor 211 to compile set of training data that include textual inputs and image inputs. The textual inputs and the image inputs can both describe training image frames. For example, the textual inputs can include a textual summary of one or more image frames which are represented by the image inputs. Stated otherwise, the image inputs can include one or more image frames and the textual inputs can provided a textual description of what is shown in or otherwise included in the one or more image frames.

In some embodiments, the instructions stored by the one or more memory devices can cause the one or more processors to train the image encoder and the text encoder by providing the one or more textual inputs to the text encoder to cause the text encoder to generate one or more textual signatures. For example, the instructions stored by the memory 212 can cause the processor 211 to provide textual inputs to the text encoder 305 to cause the text encoder 305 to generate textual signatures. In some embodiments, the textual signatures generated by the text encoder 305 may refer to or include vector embeddings.

In some embodiments, the instructions stored by the one or more memory devices can cause the one or more processors to train the image encoder and the text encoder by providing the one or more image inputs to the image encoder to cause the image encoder to generate one or more image signatures. For example, the instructions stored by the memory 212 can cause the processor 211 to provide image inputs to the image encoder 310 to cause the image encoder 310 to generate image signatures. In some embodiments, the image signatures generated by the image encoder 310 may refer to or include vector embeddings.

In some embodiments, the instructions stored by the one or more memory devices can cause the one or more processors to train the image encoder and the text encoder by detecting, based on a comparison between the one or more textual signatures and the one or more image signatures, that an amount of variance between the image encoder and the text encoder adheres to one or more aspects of contrastive loss-based training. For example, the instructions stored by the memory 212 can cause the processor 211 to detect that variances or differences between the image encoder 310 and the text encoder 305 adhere to aspects of contrastive loss-based training. In some embodiments, the aspects of contrastive loss-based training can refer to or include a margin or distance between signatures generated by the text encoder 305 and the image encoder 310. While the text encoder 305 and the image encoder 310 are being trained, the inputs provided to the text encoder 305 and the image encoder 310 are expected to result in similar signatures as the text encoder 305 provided to the text encoder is describing the image input provided to the image encoder 310. Stated otherwise, the margin or difference between the respective signatures should be minimal. In some embodiments, the processor 211 can detect that the amount of variance between the image encoder and the text encoder adheres to the aspects of the contrastive loss-based training based on the amount of variance being less than or equal to the margin for positive pairs.

In some embodiments, the instructions stored by the one or more memory devices can cause the one or more processors to train the image encoder and the text encoder by deploying the first machine learning model and the second machine learning model. For example, the instructions stored by the memory 212 can cause the processor 211 to deploy the vision transformer 230 and the language model 245 for subsequent signature generation.

In some embodiments, the instructions stored by the one or more memory devices can cause the one or more processors to, while the first machine learning model is being trained, provide, to the second machine learning model, one or more textual inputs that provide a textual description of at least one image frame. The one or more textual inputs can cause the second machine learning model to output one or more textual signatures that describe the at least one image frame. For example, the instructions stored by the memory 212 can cause the processor 211 to provide, to the language model 245, textual inputs that provide a textual description of at least one image frame. In some embodiments, the textual description can include a strings or a collection of characters which provide an indication of what is captured by or otherwise included in the image frame. For example, the textual description may include "person holding umbrella" as one or more strings.

In some embodiments, the instructions stored by the one or more memory devices can cause the one or more processors to, while the first machine learning model is being trained, provide, to the first machine learning model, the at least one image frame to cause the first machine learning model to output one or more image signatures that describe the at least one image frame. For example, the instructions stored by the memory 212 can cause the processor 211 to provide, to the vision transformer 230, the image frame which was described by the textual inputs provided to the language model 245. In some embodiments, the processor 211 can provide the image frame to cause the vision transformer 230 to generate an image signature.

In some embodiments, the instructions stored by the one or more memory devices can cause the one or more processors to, while the first machine learning model is being trained, determine a performance of the first machine learning model based on a difference between the one or more textual signatures and the one or more image signatures. For example, the instructions stored by the memory 212 can cause the processor 211 to determine a performance of the vision transformer 230 based on a difference between the textual signature generated by the language model 245 and the image signature generated by the vision transformer 230. In some embodiments, given that the textual description (provided to the language model 245) described the image frame that was provided to the vision transformer 230, the textual signature and the image signature should have minimal differences or variances.

In some embodiments, the instructions stored by the one or more memory devices can cause the one or more processors to detect that the natural language query includes an indication of one or more points in time or a particular zone within the building. For example, the instructions stored by the memory 212 can cause the processor 211 to detect that the natural language query included one or more inputs or sets of information which indicated a point in time or a particular zone within the building. In some embodiments, the natural language query may include a message such as, "provide images of a person wearing a hat from between 1:30 PM to 1:35PM." In other embodiments, the natural language query may include a message such as, "show images of people taking an escalator to floor five of the building."

In some embodiments, the instructions stored by the one or more memory devices can cause the one or more processors to identify, based on the search of the database, the one or more matches. The one or more matches are between the textual signature and one or more image frames of the plurality of image frames. For example, the instructions stored by the memory 212 can cause the processor 211 to identify, based on the search of the database 235, the one or more matches that are between the textual signature and the one or more image frames.

In some embodiments, the instructions stored by the one or more memory devices can cause the one or more processors to select at least one image frame of the one or more image frames based on metadata that corresponds to the at least one image frame. For example, the instructions stored by the memory 212 can cause the processor 211 to select an image frame based on metadata that corresponds to the image frame. In some embodiments, the processor 211 can utilize metadata (for respective image frames) to filter or otherwise restrict the selection of image frames that correspond to one or more temporal or spatial aspects of the natural language query. For example, the metadata for each image frame can provide a timestamp which indicates a point in time for which the image frame was captured. As another example, the metadata for each image frame can provide an indication as to where a corresponding video device is located within the building.

In some embodiments, the metadata that corresponds to the at least one image frame indicates at least one of a timestamp associated with the one or more points of time or that the at least one image frame was captured from the particular zone within the building. For example, the metadata data associated with the selected image frame can identify a timestamp which indicates that the selected image frame was captured during the one or more points in time indicated by the natural language query. As another example, the metadata associated with the selected image frame can identify that the selected image was captured from the particular zone as indicated by the natural language query.

In some embodiments, generation of the plurality of image signatures can include the instructions stored by the one or more memory devices causing the one or more processors to implement, prior to storage of the plurality of image signatures in the database, a data cache to store image signatures as they are output by the first machine learning model. For example, generation of the plurality of image signatures can include the instructions stored by the memory 212 causing the processor 211 to implement, prior to storage of the plurality of image signatures in the database 235, the data cache 237. In some embodiments, the data cache 237 can temporality store or maintain the image signatures for subsequent processing or analysis.

In some embodiments, generation of the plurality of image signatures can include the instructions stored by the one or more memory devices causing the one or more processors to, as the image signatures are stored in the data cache, compare one or more first image signatures of the image signatures with one or more second image signatures of the image signatures. The one or more first image signatures can correspond to one or more first image frames which precede one or more second image frames for which the one or more second image signatures correspond to. For example, the instructions stored by the memory 212 can cause the processor 211 compare first image signatures with second image signatures. The processor 211 can compare the image signatures to detect or identify one or more instances in which image signatures (that follow or precede one another temporal) capture or otherwise describe similar information. In some embodiments, the processor 211 can prevent a duplication of image signatures by selecting a representative image signature which accurately describes more than one image frame.

In some embodiments, generation of the plurality of image signatures can include the instructions stored by the one or more memory devices causing the one or more processors to, as the image signatures are stored in the data cache, select, based at least on the one or more first image signatures or the one or more second image signatures describing the one or more first image frames and the one or more second image frames, at least one image signature from the one or more first image signatures or the one or more second image signatures to represent both the one or more first image signatures and the one or more second image signatures within the database. For example, the instructions stored by the memory 212 can cause the processor 211 to select at least one image signatures from between one or more first image signatures or one or more second image signatures that represents both the one or more first image signatures and the one or more second image signatures. Stated otherwise, the processor 211 can select an image signature that accurately represents multiple image signatures.

In some embodiments, comparison of the one or more first image signatures with the one or more second image signatures includes the instructions stored by the one or more memory devices causing the one or more processors to implement logic that utilizes (i) threshold-based deduplication and (ii) temporal proximity to select the at least one image signature. For example, the instructions stored by the memory 212 can cause the processor 211 to implement the logic 217. The logic 217 can utilize threshold-based deduplication and temporal proximity to select the at least one image signature. For example, the logic 217 can utilize threshold differences or variances between image signatures to detect one or more instances in which a single image signature accurately describes one or more additional image signatures. As another example, the logic 217 can implement temporal proximity to identify one or more image signatures that describe respective image frames which occurred or where captured temporal close to one another. In some embodiments, the temporal proximity may refer to or include image frames captured within a certain time range. For example, the temporal proximity may include a time range of ten milliseconds. As another example, the temporal proximity may include a time range of 100 nanoseconds. In some embodiments, the temporal proximity may include a range of image frames. For example, the temporal proximity may limit evaluation of image frames that are subsequent to one another or no more than five image frames apart in sequent.

In some embodiments, the first machine learning model can include an image encoder configured to generate one or more first vector embeddings. For example, the vision transformer 230 can include the image encoder 310 that can generate one or more first vector embeddings. In some embodiments, the second machine learning model can include a text encoder configured to generate one or more second vector embeddings. For example, the language model 245 can include the text encoder that can generate one or more second vector embeddings.

In some embodiments, performance of the search can include the instructions stored by the one or more memory devices causing the one or more processors to perform, using cosine similarity, a comparison between the one or more first vector embeddings and the one or more second vector embeddings. For example, the instructions stored by the memory 212 can cause the processor 211 to search the database 235 for matches by implementing cosine similarity to identify one or more image signatures (stored in the database 235) that match, closely resemble, or are similar to the textual signature. In some embodiments, the processor 211 can perform, using cosine similarity, a comparison between the first vector embeddings and the second vector embeddings. For example, the processor 211 can identify which vector embeddings (that represents image signatures) include a minimal distance or shares the most similarities to the vector embedding that represents the textual signature.

In some embodiments, comparison of the one or more first image signatures with the one or more second image signatures can includes the instructions stored by the one or more memory devices causing the one or more processors to determine that a vector difference between the one or more first image signatures and the one or more second image signatures is less than a threshold. For example, the instructions stored by the memory 212 can cause the processor 211 to implement threshold deduplication analysis to determine whether at least one image signature accurately describes one or more additional image signatures. Stated otherwise, the processor 211 can determine differences (e.g., distances) between vector embeddings to determine whether a single vector embedding describes one or more additional vector embeddings. In instances where the processor 211 detects the vector difference is less than the threshold, the processor 211 can prevent duplication of vector embeddings by having the single vector embeddings be the representative vector embedding.

In some embodiments, comparison of the one or more first image signatures with the one or more second image signatures can includes the instructions stored by the one or more memory devices causing the one or more processors to detect, based on the vector difference being less than the threshold, that the at least one image signature describes both the one or more first image signatures and the one or more second image signatures. For example, the instructions stored by the memory 212 can cause the processor 211 to detect that one or more image signatures are accurately described by a single image signature based on a difference (e.g., distance) between the image signatures indicating that the image signatures describes similar or nearly identical image frames.

In some embodiments, comparison of the one or more first image signatures with the one or more second image signatures can include the instructions stored by the one or more memory devices causing the one or more processors to determine that an amount of time elapsed between the one or more first image frames and the one or more second image frames is less than a predetermined threshold. For example, the instructions stored by the memory 212 can cause the processor 211 to implement temporal proximity (e.g., how close in time where one or more image frames capture) to determine how much time has elapsed between one or more first image frames and one or more second image frames. Stated otherwise, the processor 211 can determine a time span which occurred between the capturing of the one or more first image frames and the one or more second image frames. In some embodiments, the processor 211 can implement temporal proximity to determine whether the amount of time between the image frames is such that is unlikely that anything captured within the first image frame will not also be captured within the second image frame.

In some embodiments, comparison of the one or more first image signatures with the one or more second image signatures can include the instructions stored by the one or more memory devices causing the one or more processors to determine, based on the amount of time being less than the predetermined threshold, whether the at least one image signature describes both the one or more first image frames and the one or more second image frames. For example, the instructions stored by the memory 212 can cause the processor 211 to determine that at least one image signature describes both a first image frame and a second image frame based on the amount of time elapsed between capturing the first image frame and the second image frame being less than a predetermined threshold. Stated otherwise, the processor 211 can determine that an image signature (which describes the first image frame) can accurately describe both the first image frame and the second image frame based on the amount of time between when the image signature was captured and a subsequent image signature (which described the second image frame) is less than a threshold. Stated otherwise, the first image frame and the second image frame were captured in close succession to one another.

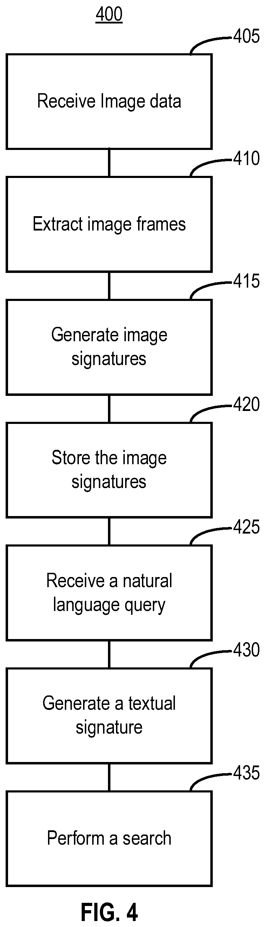

FIG. 4 depicts a flow diagram of a method 400, according to some embodiments. In some embodiments, the method 400 may refer to or include one or more processes, steps, functions, or routines to identify one or more image frames or video segments that correspond to natural language prompts, queries, requests, or inputs. In some embodiments, the method 400 may be implemented by at least one system or computing device described herein. For example, the processing circuit 210 may implement the method 400. In some embodiments, the method 400 and/or one or more steps thereof may be modified or changed. For example, one or more steps of the method 400 may be omitted, skipped, combined, separated, reproduced, replicated, repeated, or otherwise altered.

In some embodiments, at step 405, image data may be received. For example, the processing circuit 210 may receive one or more video feeds or video streams for the video device 220. As another example, the processing circuit 210 may receive video segments or one or more portions of image data collected by or otherwise obtained by the video device 220. In some embodiments, the image data may capture or otherwise include respective views or feeds from within or external to a building. For example, the image data may include video feeds from or more cameras or video devices located throughout a building. As another example, the image data include surveillance footage captured by one or more security cameras.

In some embodiments, at step 410, image frames may be extracted. For example, the processing circuit 210 may extract one or more image frames from the image data received in step 405. In some embodiments, the processing circuit 210 may extract the image frames by parsing or otherwise separate the image data into multiple segments or portions with each segment or portion corresponding to respective image frames captured by the image data. In some embodiments, the processing circuit 210 may parse or otherwise sort the image frames in accordance with metadata. For example, the processing circuit 210 may sort image frames based on an identifier (as indicated by the metadata) of a given video device or camera that captured the data. As another example, the processing circuit 210 may sort image frames based on a point in time (e.g., timestamps) for which the image frames were captured.

In some embodiments, at step 415, image signatures may be generated. For example, the processing circuit 210 may provide one or more prompts (to the vision transformer 230) to generate image signatures that correspond to or otherwise described respective image frames of the image frames extracted in step 410. Stated otherwise, the processing circuit 210 may prompt the vision transformer 230 to generate outputs (e.g., signatures) which provide context descriptions of the image frames provided to the vision transformer 230.

In some embodiments, at step 420, the image signatures may be stored. For example, the processing circuit 210 may store the signatures (generated by the vision transformer 230) in the database 235. In some embodiments, the processing circuit 210 may store the signatures via one or more Application Programming Interface (API) push commands. The processing circuit 210 may store the signatures (in the database 235) for subsequent searches or queries. For example, the processing circuit 210 may store the signatures as one or more queryable objects or data entities for which vector comparisons may be performed on. As another example, the processing circuit 210 may store the signatures with one or more tags which provide indications as to which image frames correspond to respective signatures stored within the database 235.

In some embodiments, at step 425, a natural language query may be received. For example, the processing circuit 210 may receive one or more prompts or inputs from the user device 225. As another example, the processing circuit 210 may present or otherwise provide a user interface for which one or more inputs or requests may be provided. In some embodiments, the processing circuit 210 may receive natural language queries to provide one or more image frames or video segments that captured certain objects or data. For example, the processing circuit 210 may receive a natural language input to provide video segments, captured within the past ten minutes, that include a person pushing a stroller. As another example, the processing circuit 210 may receive a natural language input to provide video segments that include people getting off of an elevator on the fourth floor of the building.

In some embodiments, at step 430, a textual signature may be generated. For example, the processing circuit 210 may generate a textural signature that represents or otherwise describes the natural language query received in step 425. In some embodiments, the processing circuit 210 may provide (as one or more inputs) at least one of the natural language query or a tokenized version of the natural language query to the language model 245 to cause the language model 245 to generate a textual signature. For example, upon input of the natural language query, the language model 245 may generate a vector embedding that describes or corresponds to the natural language query.

In some embodiments, at step 425, a search may be performed. For example, the processing circuit 210 may perform a search of the database 235. In some embodiments, the processing circuit 210 may search the database 235 for one or more matches. For example, the processing circuit 210 may search the database 235 for one or more image signatures that match the textual signature. Stated otherwise, the processing circuit 210 may search the database 235 for signatures that describe similar data or features to that of the textual signature.

In some embodiments, the processing circuit 210 may return one or more results to the user device 225. For example, responsive to detecting a match between the textual signature and one or more signatures stored within the database 235, the processing circuit 210 may present a user interface to display one or more image frames that correspond to the signatures. Stated otherwise, the processing circuit 210 may present a user interface that include the image frames that correspond to the natural language query based on a match between the textual signature and one or more image signatures stored within the database 235.

### Configuration of exemplary embodiments

The construction and arrangement of the systems and methods as shown in the various exemplary embodiments are illustrative only. Although only a few embodiments have been described in detail in this disclosure, many modifications are possible (e.g., variations in sizes, dimensions, structures, shapes and proportions of the various elements, values of parameters, mounting arrangements, use of materials, colors, orientations, etc.). For example, the position of elements may be reversed or otherwise varied and the nature or number of discrete elements or positions may be altered or varied. Accordingly, all such modifications are intended to be included within the scope of the present disclosure. The order or sequence of any process or method steps may be varied or re-sequenced according to alternative embodiments. Other substitutions, modifications, changes, and omissions may be made in the design, operating conditions and arrangement of the exemplary embodiments without departing from the scope of the present disclosure.

The present disclosure contemplates methods, systems and program products on any machine-readable media for accomplishing various operations. The embodiments of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. When information is transferred or provided over a network or another communications connection (either hardwired, wireless, or a combination of hardwired or wireless) to a machine, the machine properly views the connection as a machine-readable medium. Thus, any such connection is properly termed a machine-readable medium. Combinations of the above are also included within the scope of machine-readable media. Machine-executable instructions include, for example, instructions and data which cause a general purpose computer, special purpose computer, or special purpose processing machines to perform a certain function or group of functions.

Although the figures show a specific order of method steps, the order of the steps may differ from what is depicted. Also two or more steps may be performed concurrently or with partial concurrence. Such variation will depend on the software and hardware systems chosen and on designer choice. All such variations are within the scope of the disclosure. Likewise, software implementations could be accomplished with standard programming techniques with rule based logic and other logic to accomplish the various connection steps, processing steps, comparison steps and decision steps.

In various implementations, the steps and operations described herein may be performed on one processor or in a combination of two or more processors. For example, in some implementations, the various operations could be performed in a central server or set of central servers configured to receive data from one or more devices (e.g., edge computing devices/controllers) and perform the operations. In some implementations, the operations may be performed by one or more local controllers or computing devices (e.g., edge devices), such as controllers dedicated to and/or located within a particular building or portion of a building. In some implementations, the operations may be performed by a combination of one or more central or offsite computing devices/servers and one or more local controllers/computing devices. All such implementations are contemplated within the scope of the present disclosure. Further, unless otherwise indicated, when the present disclosure refers to one or more computer-readable storage media and/or one or more controllers, such computer-readable storage media and/or one or more controllers may be implemented as one or more central servers, one or more local controllers or computing devices (e.g., edge devices), any combination thereof, or any other combination of storage media and/or controllers regardless of the location of such devices.

Further embodiments of the present invention may be summarized as follows. Any of these embodiments can be claimed in a separate claim, e.g. by substituting the word "Embodiment" by "Claim", in particular in the order as mentioned below and/or in any combination with any embodiment described above or with any of the features of the attached claims:
Embodiment 1. A system comprising one or more memory devices storing instructions thereon that, when executed by one or more processors, cause the one or more processors to:
   receive, from one or more cameras of a building, image data;
   extract a plurality of image frames from the image data;
   generate, using a first machine learning model, a plurality of image signatures that describe features within the plurality of image frames;
   store, responsive to generation of the plurality of image signatures, the plurality of image signatures in a database;
   receive, from a user device, a natural language query;
   generate, using a second machine learning model, a textual signature that describes the natural language query; and
   perform, responsive to generation of the textual signature, a search of the database for one or more matches between the textual signature and the plurality of image signatures.
Embodiment 2. The system of embodiment 1, wherein the instructions further cause the one or more processors to:
   detect the one or more matches between the textual signature and at least one image signature of the plurality of image signatures;
   identify at least one image frame of the plurality of image frames that is described by the at least one image signature; and
   output, for display by a display device, the at least one image frame.
Embodiment 3. The system of embodiment 1 or 2, wherein the first machine learning model includes an image encoder, wherein the second machine learning model includes a text encoder, and wherein the instructions further cause the one or more processors to train the image encoder and the text encoder by:
   compiling one or more sets of training data that include (i) one or more textual inputs and (ii) one or more image inputs, wherein the one or more textual inputs and the one or more image inputs both describe one or more training image frames;
   providing the one or more textual inputs to the text encoder to cause the text encoder to generate one or more textual signatures;
   providing the one or more image inputs to the image encoder to cause the image encoder to generate one or more image signatures;
   detecting, based on a comparison between the one or more textual signatures and the one or more image signatures, that an amount of variance between the image encoder and the text encoder adheres to one or more aspects of contrastive loss-based training; and
   deploying the first machine learning model and the second machine learning model.
Embodiment 4. The system of any of embodiments 1 to 3, wherein the instructions further cause the one or more processors to:
   while the first machine learning model is being trained:
   provide, to the second machine learning model, one or more textual inputs that provide a textual description of at least one image frame, wherein the one or more textual inputs cause the second machine learning model to output one or more textual signatures that describe the at least one image frame;
   provide, to the first machine learning model, the at least one image frame to cause the first machine learning model to output one or more image signatures that describe the at least one image frame; and
   determine a performance of the first machine learning model based on a difference between the one or more textual signatures and the one or more image signatures.
Embodiment 5. The system of any of embodiments 1 to 4, wherein the instructions further cause the one or more processors to:
   detect that the natural language query includes an indication of one or more points in time or a particular zone within the building;
   identify, based on the search of the database, the one or more matches, wherein the one or more matches are between the textual signature and one or more image frames of the plurality of image frames; and
   select at least one image frame of the one or more image frames based on metadata that corresponds to the at least one image frame.
Embodiment 6. The system of embodiment 5, wherein the metadata that corresponds to the at least one image frame indicates at least one of:
   a timestamp associated with the one or more points of time; or
   that the at least one image frame was captured from the particular zone within the building.
Embodiment 7. The system of any of embodiments 1 to 6, wherein generation of the plurality of image signatures includes the instructions causing the one or more processors to:
   implement, prior to storage of the plurality of image signatures in the database, a data cache to store image signatures as they are output by the first machine learning model; and
   as the image signatures are stored in the data cache:
      compare one or more first image signatures of the image signatures with one or more second image signatures of the image signatures, wherein the one or more first image signatures correspond to one or more first image frames which precede one or more second image frames for which the one or more second image signatures correspond to; and
      select, based at least on the one or more first image signatures or the one or more second image signatures describing the one or more first image frames and the one or more second image frames, at least one image signature from the one or more first image signatures or the one or more second image signatures to represent both the one or more first image signatures and the one or more second image signatures within the database.
Embodiment 8. The system of embodiment 7, wherein comparison of the one or more first image signatures with the one or more second image signatures includes the instructions causing the one or more processors to:
   determine that a vector difference between the one or more first image signatures and the one or more second image signatures is less than a threshold; and
   detect, based on the vector difference being less than the threshold, that the at least one image signature describes both the one or more first image signatures and the one or more second image signatures.
Embodiment 9. The system of embodiment 7 or 8, wherein comparison of the one or more first image signatures with the one or more second image signatures includes the instructions causing the one or more processors to:
   determine that an amount of time elapsed between the one or more first image frames and the one or more second image frames is less than a predetermined threshold; and
   determine, based on the amount of time being less than the predetermined threshold, whether the at least one image signature describes both the one or more first image frames and the one or more second image frames.
Embodiment 10. The system of any of embodiments 1 to 9, wherein the first machine learning model includes an image encoder configured to generate one or more first vector embeddings, wherein the second machine learning model includes a text encoder configured to generate one or more second vector embeddings, and wherein performance of the search includes the instructions causing the one or more processors to:
   perform a comparison between the one or more first vector embeddings and the one or more second vector embeddings.
Embodiment 11. The system of embodiment 10, wherein the comparison between the one or more first vector embeddings and the one or more second vector embeddings includes the one or more processors to determine a cosine similarity between the one or more first vector embeddings and the one or more second vector embeddings.
Embodiment 12. A method, comprising:
   receiving, by one or more processing circuits, from one or more cameras of a building, image data;
   extracting, by the one or more processing circuits, a plurality of image frames from the image data;
   generating, by the one or more processing circuits, using a first machine learning model, a plurality of image signatures that describe features within the plurality of image frames;
   storing, by the one or more processing circuits, responsive to generating the plurality of image signatures, the plurality of image signatures in a database;
   receiving, by the one or more processing circuits, from a user device, a natural language query;
   generating, by the one or more processing circuits, using a second machine learning model, a textual signature that describes the natural language query; and
   performing, by the one or more processing circuits, responsive to generating the textual signature, a search of the database for one or more matches between the textual signature and the plurality of image signatures.
Embodiment 13. The method of embodiment 12, further comprising:
   detecting, by the one or more processing circuits, the one or more matches between the textual signature and at least one image signature of the plurality of image signatures;
   identifying, by the one or more processing circuits, at least one image frame of the plurality of image frames that is described by the at least one image signature; and
   outputting, by the one or more processing circuits, for display by a display device, the at least one image frame.
Embodiment 14. The method of embodiment 12 or 13, wherein the first machine learning model includes an image encoder, wherein the second machine learning model includes a text encoder, and further comprising:
   training, by the one or more processing circuits, the image encoder and the text encoder by:
   compiling, by the one or more processing circuits, one or more sets of training data that include (i) one or more textual inputs and (ii) one or more image inputs, wherein the one or more textual inputs and the one or more image inputs both describe one or more training image frames;
   providing, by the one or more processing circuits, the one or more textual inputs to the text encoder to cause the text encoder to generate one or more textual signatures;
   providing, by the one or more processing circuits, the one or more image inputs to the image encoder to cause the image encoder to generate one or more image signatures;
   detecting, by the one or more processing circuits, based on a comparison between the one or more textual signatures and the one or more image signatures, that an amount of variance between the image encoder and the text encoder adheres to one or more aspects of contrastive loss-based training; and
   deploying, by the one or more processing circuits, the first machine learning model and the second machine learning model.
Embodiment 15. The method of any of embodiments 12 to 14, further comprising:
   while the first machine learning model is being trained:
   providing, by the one or more processing circuits, to the second machine learning model, one or more textual inputs that provide a textual description of at least one image frame, wherein the one or more textual inputs cause the second machine learning model to output one or more textual signatures that describe the at least one image frame;
   providing, by the one or more processing circuits, to the first machine learning model, the at least one image frame to cause the first machine learning model to output one or more image signatures that describe the at least one image frame; and
   determining, by the one or more processing circuits, a performance of the first machine learning model based on a difference between the one or more textual signatures and the one or more image signatures.
Embodiment 16. One or more non-transitory storage media storing instructions thereon that, when executed by one or more processors, cause the one or more processors to perform operations comprising:
   receiving, from one or more cameras of a building, image data;
   extracting a plurality of image frames from the image data;
   generating, using a first machine learning model, a plurality of image signatures that describe features within the plurality of image frames;
   storing, responsive to generating the plurality of image signatures, the plurality of image signatures in a database;
   receiving, from a user device, a natural language query;
   generating, using a second machine learning model, a textual signature that describes the natural language query; and
   performing, responsive to generating the textual signature, a search of the database for one or more matches between the textual signature and the plurality of image signatures.
Embodiment 17. The one or more non-transitory storage media of embodiment 16, wherein the operations further comprise:
   detecting the one or more matches between the textual signature and at least one image signature of the plurality of image signatures;
   identifying at least one image frame of the plurality of image frames that is described by the at least one image signature; and
   outputting, for display by a display device, the at least one image frame.
Embodiment 18. The one or more non-transitory storage media of embodiment 16 or 17, wherein the first machine learning model includes an image encoder, wherein the second machine learning model includes a text encoder, and wherein the operations further include:
   training the image encoder and the text encoder by:
   compiling one or more sets of training data that include (i) one or more textual inputs and (ii) one or more image inputs, wherein the one or more textual inputs and the one or more image inputs both describe one or more training image frames;
   providing the one or more textual inputs to the text encoder to cause the text encoder to generate one or more textual signatures;
   providing the one or more image inputs to the image encoder to cause the image encoder to generate one or more image signatures;
   detecting, based on a comparison between the one or more textual signatures and the one or more image signatures, that an amount of variance between the image encoder and the text encoder adheres to one or more aspects of contrastive loss-based training; and
   deploying the first machine learning model and the second machine learning model.
Embodiment 19. The one or more non-transitory storage media of any of embodiments 16 to 18, wherein the operations further comprise:
   while the first machine learning model is being trained:
   providing, to the second machine learning model, one or more textual inputs that provide a textual description of at least one image frame, wherein the one or more textual inputs cause the second machine learning model to output one or more textual signatures that describe the at least one image frame;
   providing, to the first machine learning model, the at least one image frame to cause the first machine learning model to output one or more image signatures that describe the at least one image frame; and
   determining a performance of the first machine learning model based on a difference between the one or more textual signatures and the one or more image signatures.
Embodiment 20. The one or more non-transitory storage media of any of embodiments 16 to 19, wherein the operations further comprise:
   detecting that the natural language query includes an indication of one or more points in time or a particular zone within the building;
   identifying, based on the search of the database, the one or more matches, wherein the one or more matches are between the textual signature and one or more image frames of the plurality of image frames; and
   selecting at least one image frame of the one or more image frames based on metadata that corresponds to the at least one image frame.

In an embodiment, one or more non-transitory computer-readable storage media may store instructions that, when executed by one or more processors, cause the one or more processors to perform a method according to or within any of the above mentioned embodiments.

In an embodiment, a system may comprise: one or more processors; and at least one memory coupled to the processors and comprising instructions executable by the processors, the processors operable when executing the instructions to perform a method according to or within any of the above mentioned embodiments.

In an embodiment, a computer program product, preferably comprising a computer-readable non-transitory storage media, may be operable when executed on a data processing system to perform a method according to or within any of the above mentioned embodiments.

## Claims

1. A system comprising one or more memory devices storing instructions thereon that, when executed by one or more processors, cause the one or more processors to:
receive, from one or more cameras of a building, image data;
extract a plurality of image frames from the image data;
generate, using a first machine learning model, a plurality of image signatures that describe features within the plurality of image frames;
store, responsive to generation of the plurality of image signatures, the plurality of image signatures in a database;
receive, from a user device, a natural language query;
generate, using a second machine learning model, a textual signature that describes the natural language query; and
perform, responsive to generation of the textual signature, a search of the database for one or more matches between the textual signature and the plurality of image signatures.

2. The system of claim 1, wherein the instructions further cause the one or more processors to:
detect the one or more matches between the textual signature and at least one image signature of the plurality of image signatures;
identify at least one image frame of the plurality of image frames that is described by the at least one image signature; and
output, for display by a display device, the at least one image frame.

3. The system of claim 1 or 2, wherein the first machine learning model includes an image encoder, wherein the second machine learning model includes a text encoder, and wherein the instructions further cause the one or more processors to train the image encoder and the text encoder by:
compiling one or more sets of training data that include (i) one or more textual inputs and (ii) one or more image inputs, wherein the one or more textual inputs and the one or more image inputs both describe one or more training image frames;
providing the one or more textual inputs to the text encoder to cause the text encoder to generate one or more textual signatures;
providing the one or more image inputs to the image encoder to cause the image encoder to generate one or more image signatures;
detecting, based on a comparison between the one or more textual signatures and the one or more image signatures, that an amount of variance between the image encoder and the text encoder adheres to one or more aspects of contrastive loss-based training; and
deploying the first machine learning model and the second machine learning model.

4. The system of any of claims 1 to 3, wherein the instructions further cause the one or more processors to:
while the first machine learning model is being trained:
provide, to the second machine learning model, one or more textual inputs that provide a textual description of at least one image frame, wherein the one or more textual inputs cause the second machine learning model to output one or more textual signatures that describe the at least one image frame;
provide, to the first machine learning model, the at least one image frame to cause the first machine learning model to output one or more image signatures that describe the at least one image frame; and
determine a performance of the first machine learning model based on a difference between the one or more textual signatures and the one or more image signatures.

5. The system of any of claims 1 to 4, wherein the instructions further cause the one or more processors to:
detect that the natural language query includes an indication of one or more points in time or a particular zone within the building;
identify, based on the search of the database, the one or more matches, wherein the one or more matches are between the textual signature and one or more image frames of the plurality of image frames; and
select at least one image frame of the one or more image frames based on metadata that corresponds to the at least one image frame;
optionally, wherein the metadata that corresponds to the at least one image frame indicates at least one of:
a timestamp associated with the one or more points of time; or
that the at least one image frame was captured from the particular zone within the building.

6. The system of any of claims 1 to 5, wherein generation of the plurality of image signatures includes the instructions causing the one or more processors to:
implement, prior to storage of the plurality of image signatures in the database, a data cache to store image signatures as they are output by the first machine learning model; and
as the image signatures are stored in the data cache:
compare one or more first image signatures of the image signatures with one or more second image signatures of the image signatures, wherein the one or more first image signatures correspond to one or more first image frames which precede one or more second image frames for which the one or more second image signatures correspond to; and
select, based at least on the one or more first image signatures or the one or more second image signatures describing the one or more first image frames and the one or more second image frames, at least one image signature from the one or more first image signatures or the one or more second image signatures to represent both the one or more
first image signatures and the one or more second image signatures within the database; optionally, wherein comparison of the one or more first image signatures with the one or more second image signatures includes the instructions causing the one or more processors to:
determine that a vector difference between the one or more first image signatures and the one or more second image signatures is less than a threshold; and
detect, based on the vector difference being less than the threshold, that the at least one image signature describes both the one or more first image signatures and the one or more second image signatures; and/or
optionally, wherein comparison of the one or more first image signatures with the one or more second image signatures includes the instructions causing the one or more processors to:
determine that an amount of time elapsed between the one or more first image frames and the one or more second image frames is less than a predetermined threshold; and
determine, based on the amount of time being less than the predetermined threshold, whether the at least one image signature describes both the one or more first image frames and the one or more second image frames.

7. The system of any of claims 1 to 6, wherein the first machine learning model includes an image encoder configured to generate one or more first vector embeddings, wherein the second machine learning model includes a text encoder configured to generate one or more second vector embeddings, and wherein performance of the search includes the instructions causing the one or more processors to:
perform a comparison between the one or more first vector embeddings and the one or more second vector embeddings;
optionally, wherein the comparison between the one or more first vector embeddings and the one or more second vector embeddings includes the one or more processors to determine a cosine similarity between the one or more first vector embeddings and the one or more second vector embeddings.

8. A method, comprising:
receiving, by one or more processing circuits, from one or more cameras of a building, image data;
extracting, by the one or more processing circuits, a plurality of image frames from the image data;
generating, by the one or more processing circuits, using a first machine learning model, a plurality of image signatures that describe features within the plurality of image frames;
storing, by the one or more processing circuits, responsive to generating the plurality of image signatures, the plurality of image signatures in a database;
receiving, by the one or more processing circuits, from a user device, a natural language query;
generating, by the one or more processing circuits, using a second machine learning model, a textual signature that describes the natural language query; and
performing, by the one or more processing circuits, responsive to generating the textual signature, a search of the database for one or more matches between the textual signature and the plurality of image signatures.

9. The method of claim 8, further comprising:
detecting, by the one or more processing circuits, the one or more matches between the textual signature and at least one image signature of the plurality of image signatures;
identifying, by the one or more processing circuits, at least one image frame of the plurality of image frames that is described by the at least one image signature; and
outputting, by the one or more processing circuits, for display by a display device, the at least one image frame.

10. The method of claim 8 or 9, wherein the first machine learning model includes an image encoder, wherein the second machine learning model includes a text encoder, and further comprising:
training, by the one or more processing circuits, the image encoder and the text encoder by:
compiling, by the one or more processing circuits, one or more sets of training data that include (i) one or more textual inputs and (ii) one or more image inputs, wherein the one or more textual inputs and the one or more image inputs both describe one or more training image frames;
providing, by the one or more processing circuits, the one or more textual inputs to the text encoder to cause the text encoder to generate one or more textual signatures;
providing, by the one or more processing circuits, the one or more image inputs to the image encoder to cause the image encoder to generate one or more image signatures;
detecting, by the one or more processing circuits, based on a comparison between the one or more textual signatures and the one or more image signatures, that an amount of variance between the image encoder and the text encoder adheres to one or more aspects of contrastive loss-based training; and
deploying, by the one or more processing circuits, the first machine learning model and the second machine learning model.

11. The method of any of claims 8 to 10, further comprising:
while the first machine learning model is being trained:
providing, by the one or more processing circuits, to the second machine learning model, one or more textual inputs that provide a textual description of at least one image frame, wherein the one or more textual inputs cause the second machine learning model to output one or more textual signatures that describe the at least one image frame;
providing, by the one or more processing circuits, to the first machine learning model, the at least one image frame to cause the first machine learning model to output one or more image signatures that describe the at least one image frame; and
determining, by the one or more processing circuits, a performance of the first machine learning model based on a difference between the one or more textual signatures and the one or more image signatures.

12. One or more non-transitory storage media storing instructions thereon that, when executed by one or more processors, cause the one or more processors
(i) to perform a method according to any of the claims 8 to 11
or
(ii) to perform operations comprising:
receiving, from one or more cameras of a building, image data;
extracting a plurality of image frames from the image data;
generating, using a first machine learning model, a plurality of image signatures that describe features within the plurality of image frames;
storing, responsive to generating the plurality of image signatures, the plurality of image signatures in a database;
receiving, from a user device, a natural language query;
generating, using a second machine learning model, a textual signature that describes the natural language query; and
performing, responsive to generating the textual signature, a search of the database for one or more matches between the textual signature and the plurality of image signatures.

13. The one or more non-transitory storage media of claim 12, wherein the operations further comprise:
detecting the one or more matches between the textual signature and at least one image signature of the plurality of image signatures;
identifying at least one image frame of the plurality of image frames that is described by the at least one image signature; and
outputting, for display by a display device, the at least one image frame.

14. The one or more non-transitory storage media of claim 12 or 13, wherein the first machine learning model includes an image encoder, wherein the second machine learning model includes a text encoder, and wherein the operations further include:
training the image encoder and the text encoder by:
compiling one or more sets of training data that include (i) one or more textual inputs and (ii) one or more image inputs, wherein the one or more textual inputs and the one or more image inputs both describe one or more training image frames;
providing the one or more textual inputs to the text encoder to cause the text encoder to generate one or more textual signatures;
providing the one or more image inputs to the image encoder to cause the image encoder to generate one or more image signatures;
detecting, based on a comparison between the one or more textual signatures and the one or more image signatures, that an amount of variance between the image encoder and the text encoder adheres to one or more aspects of contrastive loss-based training; and
deploying the first machine learning model and the second machine learning model.

15. The one or more non-transitory storage media of any of claims 12 to 14, wherein the operations further comprise:
while the first machine learning model is being trained:
providing, to the second machine learning model, one or more textual inputs that provide a textual description of at least one image frame, wherein the one or more textual inputs cause the second machine learning model to output one or more textual signatures that describe the at least one image frame;
providing, to the first machine learning model, the at least one image frame to cause the first machine learning model to output one or more image signatures that describe the at least one image frame; and
determining a performance of the first machine learning model based on a difference between the one or more textual signatures and the one or more image signatures; and/or
wherein the operations further comprise:
detecting that the natural language query includes an indication of one or more points in time or a particular zone within the building;
identifying, based on the search of the database, the one or more matches, wherein the one or more matches are between the textual signature and one or more image frames of the plurality of image frames; and
selecting at least one image frame of the one or more image frames based on metadata that corresponds to the at least one image frame.
